(19) **Europäisches Patentamt European Patent Office Office européen des brevets**

(11) **EP 4 681 537 A1**

(12) **EUROPEAN PATENT APPLICATION**
published in accordance with Art. 153(4) EPC

(43) Date of publication:
**21.01.2026 Bulletin 2026/04**

(21) Application number: **24770586.6**

(22) Date of filing: **01.03.2024**

(51) International Patent Classification (IPC):
**A01N 65/00** (2009.01)  **A01N 37/08** (2006.01)
**A01N 65/06** (2009.01)  **A01P 17/00** (2006.01)
**C09K 17/32** (2006.01)

(52) Cooperative Patent Classification (CPC):
**A01N 37/08; A01N 65/00; A01N 65/06;
A01P 17/00; C09K 17/32**

(86) International application number:
**PCT/JP2024/007894**

(87) International publication number:
**WO 2024/190475 (19.09.2024 Gazette 2024/38)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **15.03.2023 JP 2023040494**

(71) Applicant: **Arakawa Chemical Industries, Ltd.
Osaka-shi
Osaka 541-0046 (JP)**

(72) Inventors:
• **SHIMMURA, Ruri**
 **Tsukuba-shi, Ibaraki 305-8666 (JP)**
• **TOYAMA, Masatoshi**
 **Tsukuba-shi, Ibaraki 305-8666 (JP)**
• **FUJIOKA, Daisuke**
 **Tsukuba-shi, Ibaraki 300-2611 (JP)**
• **NITTO, Seiya**
 **Tsukuba-shi, Ibaraki 300-2611 (JP)**

(74) Representative: **Lippert Stachow Patentanwälte
Rechtsanwälte
Partnerschaft mbB
Krenkelstraße 3
01309 Dresden (DE)**

(54) **INSECT DAMAGE INHIBITOR, METHOD FOR USING RESIN COMPOSITION, CULTIVATION METHOD, POTTING SOIL, AND METHOD FOR IMPROVING SOIL**

(57) An insect damage inhibitor for use in agricultural and horticultural applications to control insect damage, the insect damage inhibitor comprising a rosin-based resin (A), wherein a total amount of volatile components in the rosin-based resin (A) when held at 80°C for 10 minutes is 1 μg or more per 1g of resin.

**Description**

TECHNICAL FIELD

The present invention relates to an insect damage inhibitor, a method for using a resin composition, a cultivation method, a potting soil, and a method for improving soil.

BACKGROUND ART

Conventionally, in the cultivation of agricultural and horticultural crops, synthetic chemical pesticides such as organophosphorus compounds, carbamate compounds, and pyrethroid compounds have been used to control insect damage by pests (Patent Documents 1 and 2).

Moreover, many conventional synthetic chemical pesticides use fossil resources such as petroleum as their main raw material. In contrast, as environmental issues such as global warming have gained importance in recent years, the use of plant-derived biomass materials has been desired in order to reduce the environmental load.

As for plant-derived insect damage inhibitors, for example, an insect damage inhibitor containing essential oils such as neem oil has been proposed (Patent Document 3).

PRIOR ART DOCUMENT

Patent Document

Patent Document 1: JP 2020-100639 A
Patent Document 2: JP 2018-002593 A
Patent Document 3: JP 2002-154910 A

SUMMARY OF THE INVENTION

However, the synthetic chemical pesticides described in Patent Documents 1 and 2 are not sufficiently effective at controlling insect damage. Moreover, if large quantities of pesticides are used to increase the insect control effect, there is a risk that pesticide-resistant pests will emerge. Further, in recent years, environmental pollution due to the heavy use of synthetic chemical pesticides has become a major problem. Moreover, the insect control effect of the insect damage inhibitor described in Patent Document 3 is only maintained for about one week. For this reason, the insect damage inhibitor described in Patent Document 3 has a high frequency of use and is inconvenient.

The present invention has been made in view of the aforementioned circumstances, and has an object to provide an insect damage inhibitor, a method for using a resin composition, a cultivation method, a potting soil, and a method for improving soil, which are excellent in environmental characteristics through the utilization of biomass materials and can sustainably control insect damage to agricultural and horticultural crops.

As a result of intensive studies, the inventors of the present invention have discovered that the object can be achieved by an insect damage inhibitor that contains, as an active ingredient, a rosin-based resin containing a specific amount of predetermined volatile components.

Conventionally, rosin and rosin derivatives have been used in pesticides as various additives such as coating agents, spreading agents, binders, and solvents. The inventors of the present invention discovered that a rosin-based resin containing a specific amount of predetermined volatile components exhibits a sustained insect damage control effect against pests of agricultural and horticultural crops, and completed the present invention by using it as an active ingredient of an insect damage inhibitor.

An insect damage inhibitor according to one aspect of the present invention that solves the problem is an insect damage inhibitor for use in agricultural and horticultural applications to control insect damage, the insect damage inhibitor comprising a rosin-based resin (A), wherein a total amount of volatile components in the rosin-based resin (A) when held at 80°C for 10 minutes is 1 $\mu$g or more per 1g of resin.

Moreover, a method for using a resin composition according to one aspect of the present invention that solves the problem is a method for using a resin composition, the method comprising using a resin composition containing a rosin-based resin (A) to control insect damage, wherein a total amount of volatile components in the rosin-based resin (A) when held at 80°C for 10 minutes is 1 $\mu$g or more per 1g of resin, and wherein the method is for agricultural and horticultural applications.

Further, a cultivation method according to one aspect of the present invention that solves the problem is a cultivation method for cultivating a plant for agricultural and horticultural applications in soil, the method comprising blending the insect damage inhibitor into the soil.

Moreover, a potting soil according to one aspect of the present invention that solves the problem is a potting soil for use in agricultural and horticultural applications, comprising soil and the insect damage inhibitor.

Moreover, a method for improving soil according to one aspect of the present invention that solves the problem is a method for improving soil, wherein the soil is for cultivating a plant for agricultural and horticultural applications, and wherein the insect damage inhibitor is applied to the soil.

EMBODIMENT FOR CARRYING OUT THE INVENTION

Throughout the present disclosure, ranges of numerical values such as physical property values and contents can be suitably set (for example, through selection from values described in the following items). Specifically, when examples of a numerical value $\alpha$ are A3, A2, and A1 (where A3>A2>A1 is satisfied), examples of ranges of the numerical value $\alpha$ include: A3 or less; A2 or less; less than A3; less than A2; A1 or more; A2 or more; more than A1; more than A2; A1 to A2 (A1 or more and A2 or less); A1 to A3; A2 to A3; A1 or more and less than A3; A1 or more and less than A2; A2 or more and less than A3; more than A1 and less than A3; more than A1 and less than A2; more than A2 and less than A3; more than A1 and A3 or less; more than A1 and A2 or less; and more than A2 and A3 or less. In the present disclosure, the expression of "-" indicating a range is used to mean that numerical values described before and after this expression are included as a lower limit value and an upper limit value. In the following, constituents, a manufacturing method, and the like of the present disclosure are described in detail.

[Insect Damage Inhibitor]

An insect damage inhibitor according to one embodiment of the present invention (the present disclosure) is an insect damage inhibitor for use in agricultural and horticultural applications to control insect damage. The insect damage inhibitor contains a rosin-based resin (A) (hereinafter also referred to as a component (A)). A total amount of volatile components in the rosin-based resin (A) when held at 80°C for 10 minutes is 1 $\mu$g or more per 1g of resin. In this embodiment, "agricultural and horticultural applications" include any of the applications including agriculture, horticulture, and gardening. Moreover, "agricultural application" includes "agriculture application" and "horticultural application."

In the present disclosure, an insect damage inhibitor refers to an agent that controls damage to a plant (for example, feeding damage and growth inhibition) caused by insects (pests) that interfere with the healthy growth of plants. In the present disclosure, actions of the insect damage inhibitor are not particularly limited. Examples of the actions of the insect damage inhibitor include the following.

(1) A repelling action that repels pests.
(2) A reproduction-inhibiting action that inhibits the oviposition of pests and/or suppresses their activity.
(3) A hatching-inhibiting action that inhibits the hatching of pest eggs.
(4) An insecticidal action that kills pest larvae and/or adults.
(5) An action of controlling feeding damage to a plant by pests.

In one embodiment, the insect damage inhibitor preferably contains at least one agent selected from the group consisting of a pest repellent, a pest reproduction inhibitor, and an insecticide. In the present disclosure, the pest repellent is an agent having the action of the item (1) described above, the pest reproduction inhibitor is an agent having the action of the item (2) described above, and the insecticide means an agent having the action of the item (4) described above. The insect damage inhibitor has a plurality of actions. Thus, depending on the circumstances of use, the insect damage inhibitor can be used as a plurality of agents.

<Rosin-Based Resin (A)>

The component (A) is not particularly limited as long as it is a rosin-based resin in which a total amount of volatile components when held at 80°C for 10 minutes is 1 $\mu$g or more per 1g of resin. The component (A) may be used in combination.

Examples of the component (A) include: natural rosin (gum rosin, tall oil rosin, wood rosin) derived from sources such as Masson's pine (Pinus massoniana), slash pine (Pinus elliottii), Merkus pine (Pinus merkusii), Caribbean pine (Pinus caribaea), Kesiya pine (Pinus kesiya), loblolly pine (Pinus taeda), and long leaf pine (Pinus palustris); purified rosin (hereinafter, natural rosins and purified rosins are collectively referred to as unmodified rosins); hydrogenated rosin; disproportionated rosin; polymerized rosin; $\alpha,\beta$-unsaturated carboxylic acid-modified rosin; esterified products of those rosins (hereinafter also referred to as rosin esters); alkali metal salts of rosins; alkaline earth metal salts of rosins; rosin-phenol resins; and rosin polyols.

(Purified Rosin)

The purified rosin can be obtained using various known methods. Specifically, the purified rosin can be obtained using various known purification methods such as, for example, a distillation method, an extraction method, a recrystallization method, and an adsorption method. Examples of the distillation method include a method of distilling the natural rosin, typically at a temperature of about 200 to 300°C and under a reduced pressure of about 0.01 to 3 kPa. Examples of the extraction method include a method of making the natural rosin into an aqueous alkaline solution, extracting insoluble unsaponifiables with various organic solvents, and then neutralizing an aqueous layer. Examples of the recrystallization method include a method of dissolving the natural rosin in an organic solvent as a good solvent, then distilling off the solvent to form a concentrated solution, and further adding an organic solvent as a poor solvent. Examples of the good solvent include aromatic hydrocarbon solvents such as benzene, toluene, and xylene; chlorinated hydrocarbon solvents such as chloroform; lower alcohols; ketones such as acetone; and acetic acid esters such as ethyl acetate. Examples of the poor solvent include n-hexane, n-heptane, cyclohexane, and isooctane. Examples of the adsorption method include a method of bringing the natural rosin in a molten state, or the natural rosin dissolved in an organic solvent to form a solution, into contact with a porous adsorbent. Examples of the porous adsorbent include activated carbon, metal oxides such as alumina, zirconia, and silica, molecular sieves, zeolites, and microporous clays.

Moreover, the purified rosin may also be obtained by subjecting the obtained purified rosin to operations of disproportionation and hydrogenation, which are described below, either individually or in a combination of two or more.

(Disproportionated Rosin)

The disproportionated rosin can be obtained using various known methods. Specifically, the disproportionated rosin can be obtained, for example, by a method of heating the unmodified rosin in the presence of a disproportionation catalyst (disproportionation). Various known disproportionation catalysts can be used, such as supported catalysts such as palladium-on-carbon, rhodium-on-carbon, and platinum-on-carbon; metal powders such as nickel and platinum; and iodides such as iodine and iron iodide. In one embodiment, the amount of catalyst used is typically about 0.01 to 5 parts by mass, and preferably about 0.01 to 1 part by mass, per 100 parts by mass of the unmodified rosin. The reaction temperature is about 100 to 300°C, and preferably about 150 to 290°C.

Moreover, the disproportionated rosin may also be obtained by further subjecting the obtained disproportionated rosin to each of operations of purification and disproportionation described above and hydrogenation described below, either individually or in a combination of two or more.

(Hydrogenated Rosin)

The hydrogenated rosin can be obtained using various known methods. Specifically, the hydrogenated rosin can be obtained, for example, by hydrogenating the unmodified rosin using known hydrogenation conditions. Examples of the hydrogenation conditions include a method of heating the unmodified rosin to about 100 to 300°C at a hydrogen pressure of about 2 to 20 MPa in the presence of a hydrogenation catalyst. In one embodiment, the hydrogen pressure is preferably about 5 to 20 MPa. The reaction temperature is preferably about 150 to 300°C. As the hydrogenation catalyst, various known types can be used, such as supported catalysts and metal powders. Examples of the supported catalysts include palladium-on-carbon, rhodium-on-carbon, ruthenium-on-carbon, and platinum-on-carbon. Examples of the metal powders include nickel and platinum. In one embodiment, the metal powders are preferably a palladium-based catalyst, a rhodium-based catalyst, a ruthenium-based catalyst, and a platinum-based catalyst. By using those as the metal powders, the unmodified rosin achieves a higher hydrogenation rate, and the hydrogenation time is shortened. In one embodiment, the amount of hydrogenation catalyst used is typically about 0.01 to 5 parts by mass, and preferably about 0.01 to 2 parts by mass, per 100 parts by mass of the unmodified rosin.

The hydrogenation may optionally be carried out with the unmodified rosin dissolved in a solvent. The solvent used is not particularly limited. The solvent is preferably one that is inert to the reaction and in which the raw materials and products are readily soluble. Specifically, solvents such as cyclohexane, n-hexane, n-heptane, decalin, tetrahydrofuran, and dioxane can be used, either individually or in a combination of two or more. In one embodiment, the amount of solvent used is typically an amount such that the solid content is 10% by mass or more relative to the unmodified rosin, and is preferably an amount such that the solid content is about 10% to 70% by mass.

Moreover, the hydrogenated rosin may also be obtained by further subjecting the obtained hydrogenated rosin to each of the operations of purification, hydrogenation, and disproportionation, either individually or in a combination of two or more.

Moreover, to improve the color tone, the purified rosin, the hydrogenated rosin, and the disproportionated rosin may be further subjected to a dehydrogenation treatment. The dehydrogenation treatment is not particularly limited. In one embodiment, the dehydrogenation treatment is performed on the purified rosin, the hydrogenated rosin, and the disproportionated rosin in a sealed vessel in the presence of a dehydrogenation catalyst, at an initial hydrogen pressure of less than $10 \text{ kg/cm}^2$, preferably less than $5 \text{ kg/cm}^2$, and at a reaction temperature of about 100 to 300°C, preferably in a range with a lower limit of 200°C and an upper limit of 280°C. In one embodiment, the dehydrogenation catalyst is preferably a palladium-based catalyst, a rhodium-based catalyst, or a platinum-based catalyst, and is typically used supported on a carrier such as silica or carbon. In one embodiment, the amount of catalyst used is typically 0.01 to 5% by weight relative to the purified rosin, the hydrogenated rosin, and the disproportionated rosin, and is preferably in a range with a lower limit of 0.05% by weight and an upper limit of 3% by weight.

(Polymerized Rosin)

The polymerized rosin can be obtained using various known methods. Specifically, the polymerized rosin can be obtained, for example, by a method such as reacting the unmodified rosin in a solvent such as toluene or xylene, which contains a catalyst such as sulfuric acid, hydrogen fluoride, aluminum chloride, or titanium tetrachloride, at a reaction temperature of about 40 to 160°C for about 1 to 5 hours.

Specific examples of the polymerized rosin include gum-based polymerized rosin using gum rosin (for example, product name "Polymerized Rosin B-140", manufactured by Rosin Chemical (Wuping) Co., Ltd.), tall oil-based polymerized rosin using tall oil rosin (for example, product name "Sylvatac 140", manufactured by Arizona Chemical), and wood-based polymerized rosin using wood rosin (for example, product name "Dymerex", manufactured by Eastman Chemical Company).

Moreover, as the polymerized rosin, one may also use a product obtained by subjecting the polymerized rosin to various treatments, such as the aforementioned purification, hydrogenation, disproportionation, as well as various $\alpha,\beta$-unsaturated carboxylic acid modifications such as acrylation, maleation, and fumaration described below. Moreover, those various treatments may be performed individually or in a combination of two or more.

($\alpha,\beta$-Unsaturated Carboxylic Acid-Modified Rosin)

The $\alpha,\beta$-unsaturated carboxylic acid-modified rosin is a product obtained by subjecting the unmodified rosin to an addition reaction with $\alpha,\beta$-unsaturated carboxylic acid.

The $\alpha,\beta$-unsaturated carboxylic acid is not particularly limited. Specifically, examples of the $\alpha,\beta$-unsaturated carboxylic acid include acrylic acid, methacrylic acid, maleic acid, fumaric acid, itaconic acid, citraconic acid, muconic acid, maleic anhydride, itaconic anhydride, citraconic anhydride, muconic anhydride, maleic acid half-esters, fumaric acid half-esters, and itaconic acid half-esters. In one embodiment, the $\alpha,\beta$-unsaturated carboxylic acid is preferably acrylic acid, maleic acid, maleic anhydride, or fumaric acid. In one embodiment, from the viewpoint of excellent fluidity when molten and excellent molding processability, the amount of the $\alpha,\beta$-unsaturated carboxylic acid used is typically about 1 to 20 parts by mass, and preferably about 1 to 3 parts by mass, per 100 parts by mass of the unmodified rosin.

The $\alpha,\beta$-unsaturated carboxylic acid-modified rosin can be obtained using various known methods. Specifically, the $\alpha,\beta$-unsaturated carboxylic acid-modified rosin can be obtained, for example, by adding the $\alpha,\beta$-unsaturated carboxylic acid to the unmodified rosin that has been melted under heating, and reacting the mixture at a temperature of about 180 to 240°C for about 1 to 9 hours. Moreover, the aforementioned reaction may be carried out while bubbling an inert gas, such as nitrogen, into a sealed reaction system. Further, in the reaction, known catalysts may be used, for example Lewis acids such as zinc chloride, iron chloride, or tin chloride, or Bronsted acids such as p-toluenesulfonic acid or methanesulfonic acid. In one embodiment, the amount of those catalysts used is typically about 0.01 to 10% by mass relative to the unmodified rosin.

The obtained $\alpha,\beta$-unsaturated carboxylic acid-modified rosin may contain resin acids derived from the unmodified rosin. When the resin acids derived from the unmodified rosin are contained, their content in the $\alpha,\beta$-unsaturated carboxylic acid-modified rosin is preferably less than 10% by mass.

Moreover, the $\alpha,\beta$-unsaturated carboxylic acid-modified rosin may also be one that is obtained by further subjecting the obtained $\alpha,\beta$-unsaturated carboxylic acid-modified rosin to the aforementioned hydrogenation.

(Rosin Esters)

Examples of the rosin esters include reaction products of an alcohol with the unmodified rosin, the hydrogenated rosin, the disproportionated rosin, the polymerized rosin, and the $\alpha,\beta$-unsaturated carboxylic acid-modified rosin (hereinafter, those are collectively referred to as rosins). In the present disclosure, esterified products of the unmodified rosin, the hydrogenated rosin, the disproportionated rosin, the polymerized rosin, and the $\alpha,\beta$-unsaturated carboxylic acid-modified rosin are referred to as unmodified rosin ester, purified rosin ester, hydrogenated rosin ester, disproportionated rosin ester, polymerized rosin ester, and α,β-unsaturated carboxylic acid-modified rosin ester, respectively.

The alcohol is not particularly limited. Examples of the alcohol include: monohydric alcohols such as methanol, ethanol, n-propanol, isopropanol, n-butanol, sec-butanol, tert-butyl alcohol, n-octyl alcohol, 2-ethylhexyl alcohol, decyl alcohol, lauryl alcohol, cyclohexanol, benzyl alcohol, and borneol; dihydric alcohols such as ethylene glycol, diethylene glycol, triethylene glycol, tetraethylene glycol, propylene glycol, neopentyl glycol, trimethylene glycol, cyclohexanedimethanol, 2,2,4,4-tetramethyl-1,3-cyclobutanediol, 4,4'-isopropylidenedicyclohexanol, and 4,8-bis(hydroxymethyl)tricyclo[5.2.1.02,6]decane; trihydric alcohols such as glycerin, trimethylolethane, and trimethylolpropane; tetrahydric alcohols such as pentaerythritol, diglycerin, and di(trimethylolpropane); pentahydric alcohols such as triglycerin; and hexahydric alcohols such as dipentaerythritol. As the alcohol, it is also possible to use substances that react with carboxylic acids to form esters, such as glycidyl ethers and glycidol. The alcohols may be used in combination.

In one embodiment, the alcohol is preferably a trihydric to hexahydric alcohol, and more preferably is glycerin, pentaerythritol, diglycerin, or dipentaerythritol.

The rosin esters can be obtained using various known methods. Specifically, examples thereof include reacting the rosins with the alcohol at a temperature of about 150 to 300°C for about 1 to 24 hours. In one embodiment, the respective charged amounts of the rosins and alcohol are typically such that the equivalent ratio of OH groups in the alcohol to COOH groups in the rosins is about 0.8 to 8, and preferably about 1.1 to 1.3.

In the method for producing the rosin esters, the esterification reaction can be advanced in the presence of a catalyst to shorten the reaction time. Examples of the catalyst include acid catalysts such as p-toluenesulfonic acid, acetic acid, methanesulfonic acid, hypophosphorous acid, and sulfuric acid; metal hydroxides such as calcium hydroxide and magnesium hydroxide; metal oxides such as calcium oxide and magnesium oxide; and metal salts such as iron chloride and calcium formate. The catalysts may be used in combination. Moreover, water is produced as a result of the esterification reaction. Thus, the reaction can be advanced while removing the produced water from the system. In one embodiment, considering the color tone of the resulting rosin ester, the esterification reaction is preferably carried out under a stream of an inert gas. Moreover, the reaction can be carried out under pressure if necessary.

In the method for producing the rosin esters, the reaction may be carried out in an organic solvent that is non-reactive with the rosins and alcohol. Examples of the organic solvent include hexane, cyclohexane, toluene, and xylene. Note that, when an organic solvent is used, the organic solvent or unreacted raw materials can be distilled off under reduced pressure if necessary.

In the method for producing the rosin esters, the obtained rosin esters may be further subjected to various treatments such as the aforementioned purification, hydrogenation, disproportionation, and α,β-unsaturated carboxylic acid modification. Moreover, those various treatments may be performed individually or in a combination of two or more.

Moreover, the method for producing hydrogenated rosin ester, disproportionated rosin ester, polymerized rosin ester, and α,β-unsaturated carboxylic acid-modified rosin ester may also be a method that involves performing, respectively, hydrogenation, disproportionation, a polymerization reaction, and a modification reaction with an α,β-unsaturated carboxylic acid on the reaction product of the unmodified rosin and the alcohol.

Note that, even among rosin esters, those that are hydrophilic or water-soluble may be washed away by rainwater, for example, and in such cases, it can be difficult for the insect damage control effect to be sustained. Thus, especially when such applications are anticipated, it is preferable that the rosin esters of the present disclosure do not contain hydrophilic or water-soluble rosin esters; for example, it is preferable that they do not contain rosin polyoxyalkylene esters (such as rosin polyoxyethylene esters) that use polyalkylene glycol (such as polyethylene glycol) as the alcohol.

(Alkali Metal Salts of Rosins)

The alkali metal salts of rosins (hereinafter also simply referred to as alkali metal salts) are neutralization salts of the rosins, formed with a metal compound containing an alkali metal (hereinafter also simply referred to as an alkali metal compound).

The rosins are not particularly limited as long as they are rosin-based resins having a carboxyl group. Examples of the rosins include the unmodified rosin, the hydrogenated rosin, the disproportionated rosin, the polymerized rosin, and the α,β-unsaturated carboxylic acid-modified rosin.

The alkali metal contained in the alkali metal salt is not particularly limited. Examples of the alkali metal include lithium, sodium, potassium, rubidium, and cesium. The alkali metals may be used in combination.

In one embodiment, the alkali metal is preferably at least one selected from the group consisting of sodium and potassium.

The alkali metal compound is not particularly limited as long as it forms a salt with the rosins. Examples of the alkali metal compound include hydroxides, oxides, chlorides, nitrates, acetates, sulfates, and carbonates of the alkali metals. The metal compounds may be used in combination.

In one embodiment, the alkali metal compound is preferably sodium hydroxide or potassium hydroxide. In one embodiment, the form of the alkali metal compound is preferably an aqueous solution.

The alkali metal salt is obtained by reacting (neutralizing) the rosins with the alkali metal compound.

Examples of the method for reacting the rosins with the alkali metal compound include a method of directly reacting the rosins with the alkali metal compound in the presence or absence of a solvent (direct method), and a method of reacting a metal salt of the rosins, other than an alkali metal salt, with an alkali metal compound in the presence of a solvent to cause salt exchange (double decomposition method). The reaction temperature is not particularly limited. The reaction temperature is typically in the range from room temperature to the boiling point of the solvent. The reaction time varies depending on the reaction temperature. The reaction time is typically about 10 minutes to 24 hours. Moreover, after the reaction is complete, the solvent may be distilled off.

Examples of the solvent include: water; alcohol-based solvents such as methanol, ethanol, 1-propanol, 2-propanol, 1-butanol, ethylene glycol, and propylene glycol; ether alcohol-based solvents such as diethylene glycol, triethylene glycol, and 2-methoxyethanol; aromatic hydrocarbon-based solvents such as toluene and xylene; ester-based solvents such as ethyl acetate and butyl acetate; and ketone-based solvents such as methyl ethyl ketone and methyl isobutyl ketone. In one embodiment, the solvent is preferably water.

The reaction between the rosins and the alkali metal compound is carried out such that the amount of alkali metal introduced, relative to the COOH groups of the rosins, is typically 5 to 100 equivalent percent, and preferably 10 to 100 equivalent percent.

(Alkaline Earth Metal Salts of Rosins)

The alkaline earth metal salts of rosins (hereinafter also simply referred to as alkaline earth metal salts) are neutralization salts of the rosins, formed with a metal compound containing an alkaline earth metal (hereinafter also simply referred to as an alkaline earth metal compound).

The rosins are not particularly limited as long as they are rosin-based resins having a carboxyl group. Examples of the rosins include the unmodified rosin, the hydrogenated rosin, the disproportionated rosin, the polymerized rosin, and the $\alpha,\beta$-unsaturated carboxylic acid-modified rosin.

The alkaline earth metal contained in the alkaline earth metal salt is not particularly limited. Examples of the alkaline earth metal include beryllium, magnesium, calcium, strontium, and barium. The alkaline earth metals may be used in combination.

In one embodiment, the alkaline earth metal is preferably at least one selected from the group consisting of magnesium and calcium.

The alkaline earth metal compound is not particularly limited as long as it forms a salt with the rosins. Examples of the alkaline earth metal compound include hydroxides, oxides, chlorides, nitrates, acetates, sulfates, and carbonates of the alkaline earth metals. The alkaline earth metal compounds may be used in combination.

In one embodiment, the alkaline earth metal compound is preferably magnesium hydroxide, magnesium oxide, calcium hydroxide, or calcium oxide.

The alkaline earth metal salt is obtained by reacting (neutralizing) the rosins with the alkaline earth metal compound.

Examples of the method for reacting the rosins with the alkaline earth metal compound include a method of directly reacting the rosins and the alkaline earth metal compound in the presence or absence of an organic solvent (direct method); and a method of reacting a metal salt of the rosins, other than an alkaline earth metal salt, with an alkaline earth metal compound in the presence of water and/or an organic solvent to cause salt exchange (double decomposition method). The reaction temperature is not particularly limited. In the direct method, the reaction temperature is typically about 150 to 270°C, and in the double decomposition method, it is typically in the range from room temperature to the boiling point of the solvent. The reaction time varies depending on the reaction temperature. The reaction time is typically about 10 minutes to 24 hours. Moreover, after the reaction is complete, the solvent may be distilled off.

Examples of the organic solvent include aromatic hydrocarbon-based solvents such as toluene and xylene; ester-based solvents such as ethyl acetate and butyl acetate; and ketone-based solvents such as methyl ethyl ketone and methyl isobutyl ketone.

In one embodiment, the reaction between the rosins and the alkaline earth metal compound is carried out such that the amount of alkaline earth metal introduced, relative to the COOH groups of the rosins, is typically 5 to 100 equivalent percent, and preferably 10 to 100 equivalent percent.

(Rosin-Phenol Resin)

The rosin-phenol resin is obtained by reacting the unmodified rosin with phenols.

The phenols are not particularly limited. Specifically, examples of the phenols include phenol, naphthols, alkylphenols, and arylphenols. The phenols may be used in combination. In one embodiment, the amount of phenols used is typically about 0.8 to 1.5 moles per 1 mole of the raw rosin.

Examples of the alkylphenols include o-cresol, o-n-butylphenol, o-isobutylphenol, o-tert-butylphenol, o-pentylphenol, o-(cyclohexyl)phenol, o-octylphenol, o-nonylphenol, m-cresol, m-n-butylphenol, m-isobutylphenol, m-tert-butylphenol, m-pentylphenol, m-(cyclohexyl)phenol, m-octylphenol, m-nonylphenol, p-cresol, p-n-butylphenol, p-isobutylphenol, p-tert-butylphenol, p-pentylphenol, p-(cyclohexyl)phenol, p-octylphenol, and p-nonylphenol.

The method for producing the rosin-phenol resin is not particularly limited. Examples of the method for producing the rosin-phenol resin include a method of heating and reacting the unmodified rosin and phenols, optionally in the presence of an acid catalyst. The reaction temperature and reaction time may typically be about 180 to 350°C for about 6 to 18 hours. Note that the acid catalyst that can be used in this reaction is not particularly limited. Examples of the acid catalyst include inorganic acid catalysts such as sulfuric acid, hydrogen chloride, and boron trifluoride, and organic acid catalysts such as p-toluenesulfonic acid and methanesulfonic acid. When an acid catalyst is used, it may be used in an amount of about 0.01 to 1.0 parts by mass, per 100 parts by mass of the unmodified rosin. Moreover, the rosin-phenol resin may be one that is esterified by further reacting the resin obtained in the above reaction with alcohol. The alcohol used in that case is the same as those mentioned above.

(Rosin Polyol)

A rosin polyol is a reaction product of reaction components comprising the unmodified rosin, the hydrogenated rosin and/or the disproportionated rosin, and an epoxy resin.

The aforementioned epoxy resin is not particularly limited. Examples of the epoxy resin include bisphenol epoxy resins, novolac epoxy resins, resorcinol epoxy resins, phenol aralkyl epoxy resins, naphthol aralkyl epoxy resins, aliphatic polyepoxy compounds, alicyclic epoxy compounds, glycidylamine epoxy compounds, glycidyl ester epoxy compounds, monoepoxy compounds, naphthalene epoxy compounds, biphenyl epoxy compounds, epoxidized polybutadiene, epoxidized styrene-butadiene-styrene block copolymers, epoxy group-containing polyester resins, epoxy group-containing polyurethane resins, epoxy group-containing acrylic resins, stilbene epoxy compounds, triazine epoxy compounds, fluorene epoxy compounds, triphenolmethane epoxy compounds, alkyl-modified triphenolmethane epoxy compounds, dicyclopentadiene epoxy compounds, arylalkylene epoxy compounds, trihydroxybiphenyl triglycidyl ether, and 1,1,2,2-tetra(4-hydroxyphenyl) ethane tetraglycidyl ether.

Examples of the bisphenol epoxy resins include bisphenol A epoxy resin, bisphenol E epoxy resin, bisphenol F epoxy resin, bisphenol S epoxy resin, bisphenol AD epoxy resin, hydrogenated bisphenol A epoxy resin, hydrogenated bisphenol F epoxy resin, hydrogenated bisphenol AD epoxy resin, tetrabromobisphenol A epoxy resin, 3,3',5,5'-tetramethyl-4,4'-dihydroxybiphenyl diglycidyl ether, and 2,2-bis(4-($\beta$-hydroxypropoxy)phenyl)propane diglycidyl ether.

Examples of the novolac epoxy resins include cresol novolac epoxy resin, phenol novolac epoxy resin, $\alpha$-naphthol novolac epoxy resin, bisphenol A novolac epoxy resin, and brominated phenol novolac epoxy resin.

Examples of the aliphatic polyepoxy compounds include ethylene glycol diglycidyl ether, propylene glycol diglycidyl ether, polyethylene glycol diglycidyl ether, polypropylene glycol diglycidyl ether, 1,4-butanediol diglycidyl ether, neopentyl glycol diglycidyl ether, 1,6-hexanediol diglycidyl ether, glycerol diglycidyl ether, glycerol triglycidyl ether, trimethylolpropane diglycidyl ether, trimethylolpropane triglycidyl ether, diglycerol triglycidyl ether, sorbitol tetraglycidyl ether, and diglycidyl ether.

Examples of the alicyclic epoxy compounds include 3,4-epoxycyclohexylmethyl-3',4'-epoxycyclohexanecarboxylate, 2-(3,4-epoxycyclohexyl-5,5-spiro-3,4-epoxy)cyclohexane-meta-dioxane, bis(3,4-epoxycyclohexylmethyl) adipate, bis(3,4-epoxy-6-methylcyclohexylmethyl) adipate, 3,4-epoxy-6-methylcyclohexyl-3',4'-epoxy-6'-methylcyclohexanecarboxylate, methylenebis(3,4-epoxycyclohexane), dicyclopentadiene diepoxide, ethylene glycol di(3,4-epoxycyclohexylmethyl) ether, ethylenebis(3,4-epoxycyclohexanecarboxylate), lactone-modified 3,4-epoxycyclohexylmethyl-3',4'-epoxycyclohexanecarboxylate, and 2,2-bis(4-hydroxycyclohexyl)propane diglycidyl ether.

Examples of the glycidylamine epoxy compounds include tetraglycidyldiaminodiphenylmethane, triglycidyl p-aminophenol, triglycidyl m-aminophenol, and tetraglycidyl m-xylylenediamine.

Examples of the glycidyl ester epoxy compounds include diglycidyl phthalate, diglycidyl hexahydrophthalate, diglycidyl tetrahydrophthalate, and triglycidyl trimellitate.

The reaction components may include alcohols in addition to the rosins and epoxy resins. Examples of such alcohols include the alcohols mentioned for the rosin esters. In one embodiment, the alcohols preferably include two or more selected from the group consisting of dihydric alcohols, trihydric alcohols, tetrahydric alcohols, and hexahydric alcohols.

The method for producing the rosin polyol is not particularly limited. Specifically, an example of the method for producing the rosin polyol is a method of subjecting the rosins and epoxy resins to a ring-opening addition reaction at 120 to 300°C under a nitrogen stream, in the presence or absence of a catalyst.

Examples of the catalyst include amine-based catalysts such as trimethylamine, triethylamine, tributylamine, benzyldimethylamine, pyridine, and 2-methylimidazole; quaternary ammonium salts such as benzyltrimethylammonium chloride; Lewis acids; boric acid esters; organometallic compounds; organometallic salts; trialkylphosphines; and triarylphosphines.

In the ring-opening addition reaction, a solvent may be used if necessary. The solvent is not particularly limited. The solvent is preferably one that is inert to the reaction and in which the raw materials and products are readily soluble. Specifically, examples of the solvent include: aromatic hydrocarbons such as benzene, toluene, and xylene; aliphatic hydrocarbons such as n-hexane; and alicyclic hydrocarbons such as cyclohexane, methylcyclohexane, and ethylcyclohexane.

In one embodiment, from the viewpoint of its excellent and sustained effect in controlling insect damage, the component (A) preferably contains at least one selected from the group consisting of natural rosin, hydrogenated rosin, disproportionated rosin, polymerized rosin, α,β-unsaturated carboxylic acid-modified rosin, rosin esters, alkali metal salts of rosins, and alkaline earth metal salts of rosins.

(Physical Properties of Rosin-Based Resin (A))

In the component (A), a total amount of volatile components (hereinafter also referred to as a volatile component amount) when held at 80°C for 10 minutes (hereinafter also referred to simply as volatile components) includes, for example, 50 μg, 49 μg, 48 μg, 47 μg, 46 μg, 45 μg, 44 μg, 43 μg, 42 μg, 41 μg, 40 μg, 39 μg, 38 μg, 37 μg, 36 μg, 35 μg, 34 μg, 33 μg, 32 μg, 31 μg, 30 μg, 29 μg, 28 μg, 27 μg, 26 μg, 25 μg, 24 μg, 23 μg, 22 μg, 21 μg, 20 μg, 19 μg, 18 μg, 17 μg, 16 μg, 15 μg, 14 μg, 13 μg, 12 μg, 11 μg, 10 μg, 9 μg, 8 μg, 7 μg, 6 μg, 5 μg, 4 μg, 3 μg, 2 μg, and 1 μg per 1g of resin. In one embodiment, from the viewpoint of its excellent and sustained effect in controlling insect damage, the volatile component amount in the component (A) is preferably 1 μg or more per 1g of resin. As the volatile component amount is higher in the component (A), the effect in controlling insect damage is more excellent and the effect is more sustained. In one embodiment, from the viewpoints of its excellent and sustained effect in controlling insect damage and the suppression of odor in the insect damage inhibitor, the volatile component amount in the component (A) is more preferably about 1 to 50 μg, and still more preferably about 1 to 20 μg. When the volatile component amount in the component (A) is 50 μg or less per 1g of resin, odor is suppressed in the insect damage inhibitor, improving its ease of use.

In the present disclosure, the total amount of volatile components in the component (A) when held at 80°C for 10 minutes is measured by the method described in the Examples later.

The present inventors hypothesized that when a rosin-based resin can be used as an insect damage inhibitor, the volatile components contained in the rosin-based resin would exhibit a sustained insect damage control effect by continuously volatilizing over a long period under cultivation conditions (about 15 to 35°C). However, because it is difficult to ascertain the long-term volatilization status of the volatile components under cultivation conditions, the present inventors measured the amount of volatilization over a short period at a temperature higher than the cultivation conditions and surmised that this amount of volatilization correlates with the volatilization status of the volatile components under cultivation conditions. Then, as a result of intensive studies, the present inventors discovered that the component (A), in which a total amount of volatile components when held at 80°C for 10 minutes is 1 μg or more per 1 g of resin, exhibits an excellent insect damage control effect and that this effect is sustained for a long period.

Although the reason why the component (A) exhibits an excellent and sustained insect damage control effect is not certain, it is presumed that this is because when the volatile component amount is 1 μg or more per 1 g of resin, the volatile components volatilize under cultivation conditions (about 15 to 35°C) at a rate sufficient to exhibit an excellent insect damage control effect, and they continue to volatilize over a long period.

Further, because the details of the volatile components in the component (A) are diverse and difficult to specify, the present inventors have identified a rosin-based resin that has an excellent and sustained insect damage control effect by defining the volatile component amount.

The volatile components of the component (A) are not particularly limited, as long as they are components that volatilize when held at 80°C for 10 minutes. Examples of the volatile components include monoterpenes, sesquiterpenes, toluene, acetone, xylene, and ethylbenzene. The monoterpenes are not particularly limited. Examples of the monoterpenes include α-pinene, β-pinene, camphene, α-phellandrene, β-phellandrene, α-myrcene, β-myrcene, carene, limonene, γ-terpinene, α-terpinene, α-terpineol, β-terpineol, and γ-terpineol. The sesquiterpenes are not particularly limited. Examples of the squiterpenes include α-cedrene, β-cedrene, α-copaene, β-copaene, isologifolene, longifolene, caryophyllene, β-humulene, α-farnesene, β-farnesene, β-caryophyllene, α-guaiene, β-guaiene, γ-guaiene, α-elemene, β-elemene, γ-elemene, δ-elemene, α-bisabolene, β-bisabolene, γ-bisabolene, aromadendrene, and cedrol.

Moreover, as a result of intensive studies, the present inventors discovered that when only the volatile components are used as an insect damage inhibitor, the effect in controlling insect damage is not sustained. Although the details are not certain, it is presumed that this is because when only the volatile components are used as an insect damage inhibitor, much of the volatile components volatilizes in a short period under cultivation conditions (about 15 to 35°C), and thus the insect damage control effect is not sustained. Meanwhile, it is presumed that when the component (A) is used as an insect damage inhibitor, the solid components in the component (A) (for example, resin acids) act like a carrier for the volatile components, and the insect damage control effect is sustained by imparting sustained-release properties to the volatile components.

Further, in the component (A), since components other than its volatile components (for example, resin acids) are also conventionally known to have an effect in controlling insect damage, it is presumed that an excellent and long-lasting insect damage control effect is also achieved by such components.

When the volatile component amount in the component (A) is less than 1 μg per 1 g of resin, the effect in controlling insect damage decreases, and the effect tends not to be sustained. Although the details are not certain, it is presumed that this is because when the volatile component amount is less than 1 μg per 1 g of resin, the volatile components volatilize under cultivation conditions (about 15 to 35°C) at a rate lower than that sufficient to exhibit an insect damage control effect, and also because they cannot continue to volatilize over a long period.

With respect to the component (A), in its production process, the volatile components tend to volatilize easily when the process includes steps at high temperature (200°C or higher), a distillation step, and/or a step under reduced pressure. Thus, the resulting component (A) tends to have a lower volatile component amount.

Moreover, with respect to the component (A), in its production process, the volatile component amount also tends to decrease when using raw materials that have a low volatile component amount (such as pine resin, tall oil, and rosins with a low volatile component amount).

The physical properties of the component (A), other than the volatile component amount, are not particularly limited. Examples of the softening point (°C) of the component (A) include 180°C, 175°C, 170°C, 165°C, 160°C, 155°C, 150°C, 145°C, 140°C, 135°C, 130°C, 125°C, 120°C, 115°C, 110°C, 105°C, 100°C, 95°C, 90°C, 85°C, 80°C, 75°C, and 70°C. In one embodiment, from the viewpoint that the volatile component amount is 1 μg or more per 1 g of resin, the softening point of the component (A) is preferably about 70 to 180°C; from the same viewpoint, more preferably about 70 to 150°C; and from the same viewpoint, still more preferably about 70 to 120°C. Note that in the present disclosure, the softening point is a value measured by the ring-and-ball method according to JIS K 5902.

The component (A) may contain various known additives as necessary, as long as the effects of the present disclosure are not impaired. Examples of additives include dehydrating agents, weathering stabilizers, antioxidants, ultraviolet absorbers, heat stabilizers, and light stabilizers. The additives may be used in combination.

(Solvent)

The insect damage inhibitor, by further containing a solvent, may be in the form of a dispersible composition such as a solution or an emulsion. Examples of the solvent include organic solvents and water.

Examples of the organic solvent include: aromatic hydrocarbons such as benzene, toluene, and xylene; aliphatic hydrocarbons such as n-hexane; alicyclic hydrocarbons such as cyclohexane, methylcyclohexane, and ethylcyclohexane; chlorinated hydrocarbon solvents such as chloroform; alcohols such as methanol, ethanol, 1-propanol, 2-propanol, 1-butanol, ethylene glycol, and propylene glycol; ketones such as acetone, methyl ethyl ketone, and methyl isobutyl ketone; and esters such as ethyl acetate and butyl acetate.

In one embodiment, from the viewpoints of its excellent effect in controlling insect damage and its ability to reduce environmental load, the solvent is preferably water.

(Emulsion)

When the insect damage inhibitor contains water as a solvent, the insect damage inhibitor is preferably a composition (emulsion) containing water and a surfactant (B) (hereinafter also referred to as a component (B)).

The component (B) is not particularly limited. Specifically, examples of the component (B) include high-molecular-weight surfactants obtained by polymerizing monomers, low-molecular-weight anionic surfactants, low-molecular-weight cationic surfactants, and low-molecular-weight nonionic surfactants. Those may be used in combination.

Examples of the monomer used in the production of the high molecular weight surfactant include: (meth)acrylic acid ester-based monomers such as methyl (meth)acrylate and ethyl (meth)acrylate; monocarboxylic acid-based vinyl monomers such as (meth)acrylic acid and crotonic acid; dicarboxylic acid-based vinyl monomers such as maleic acid and maleic anhydride; sulfonic acid-based vinyl monomers such as vinyl sulfonic acid and styrene sulfonic acid; alkali metal salts, alkaline earth metal salts, ammonium salts, and salts of organic bases of those various organic acids; (meth)acrylamide-based monomers such as (meth)acrylamide and N-methylol (meth)acrylamide; nitrile-based monomers such as (meth)acrylonitrile; vinyl ester-based monomers such as vinyl acetate; hydroxy group-containing (meth)acrylic acid ester-based monomers such as 2-hydroxyethyl (meth)acrylate and 2-hydroxypropyl (meth)acrylate; and other monomers such as methyl vinyl ether, glycidyl (meth)acrylate, urethane acrylate, α-olefin having 6 to 22 carbon atoms, and vinyl pyrrolidone. Those monomers may be used in combination.

Examples of the polymerization method include solution polymerization, suspension polymerization, and emulsion polymerization using a reactive surfactant other than the high-molecular-weight surfactant described later, a non-reactive surfactant other than the high molecular weight surfactant, or the like.

The weight-average molecular weight of the resulting high-molecular-weight surfactant is not particularly limited. The weight-average molecular weight of the high-molecular-weight surfactant is preferably about 1,000 to 500,000. The weight-average molecular weight mentioned here is the value in terms of polyethylene oxide as measured by gel permeation chromatography (GPC).

The reactive surfactants other than the high-molecular-weight surfactants refer to those having hydrophilic groups such as sulfonate groups and carboxyl groups, and hydrophobic groups such as alkyl groups and phenyl groups, and which have a carbon-carbon double bond in the molecule.

Examples of the low-molecular-weight anionic surfactant include dialkyl sulfosuccinate ester salts, alkane sulfonates, $\alpha$-olefin sulfonates, polyoxyethylene alkyl ether sulfosuccinate ester salts, polyoxyethylene styrylphenyl ether sulfosuccinate ester salts, naphthalene sulfonic acid-formalin condensates, polyoxyethylene alkyl ether sulfate ester salts, polyoxyethylene dialkyl ether sulfate ester salts, polyoxyethylene trialkyl ether sulfate ester salts, and polyoxyethylene alkylphenyl ether sulfate ester salts.

Examples of the low-molecular-weight cationic surfactant include tetraalkylammonium chlorides, trialkylbenzylammonium chlorides, alkylamine acetates, alkylamine hydrochlorides, oxyethylene alkylamines, polyoxyethylene alkylamines, and alkylamine acetate esters.

Examples of the low-molecular-weight nonionic surfactant include polyoxyethylene alkyl ethers, polyoxyethylene alkenyl ethers, polyoxyethylene alkylphenyl ethers, polyoxy-polycyclic phenyl ethers, sorbitan higher fatty acid esters, polyoxyethylene sorbitan higher fatty acid esters, polyoxyethylene higher fatty acid esters, glycerin higher fatty acid esters, and block copolymers of polyalkylene oxides. Specifically, examples of the low-molecular-weight nonionic surfactant include polyoxyethylene lauryl ether, polyoxyethylene oleyl ether, polyoxyethylene stearyl ether, polyoxyethylene nonylphenyl ether, polyoxyethylene octylphenyl ether, polyoxyethylene styrylphenyl ether, sorbitan monolaurate, sorbitan trioleate, polyoxyethylene sorbitan monolaurate, polyoxyethylene monolaurate, polyoxyethylene monooleate, oleic acid monoglyceride, stearic acid monoglyceride, and polyoxyethylene-polyoxypropylene block copolymers.

Surfactants other than the high-molecular-weight surfactants may be used in combination.

(Additives)

The insect damage inhibitor may further contain various additives, as long as the effects of the present disclosure are not impaired, such as antifoaming agents, viscosity modifiers, fillers, antioxidants, water-resisting agents, film-forming aids, preservatives, pH adjusters such as aqueous ammonia and sodium bicarbonate, surfactants, anti-aging agents, ultraviolet absorbers, antioxidants, and light stabilizers. Those additives may be used in combination.

(Content of Each Component)

The content of the component (A) in the insect damage inhibitor is not particularly limited. Examples of the content of the component (A) in the insect damage inhibitor include 100 parts by mass, 95 parts by mass, 90 parts by mass, 85 parts by mass, 80 parts by mass, 75 parts by mass, 70 parts by mass, 65 parts by mass, 60 parts by mass, 55 parts by mass, 50 parts by mass, 45 parts by mass, 40 parts by mass, 35 parts by mass, 30 parts by mass, 25 parts by mass, 20 parts by mass, and 15 parts by mass, per 100 parts by mass of the insect damage inhibitor. In one embodiment, from the viewpoint of its excellent and sustained effect in controlling insect damage, the content of the component (A) in the insect damage inhibitor is preferably about 15 to 100 parts by mass, from the same viewpoint, more preferably about 55 to 100 parts by mass, and from the same viewpoint, still more preferably about 80 to 100 parts by mass, per 100 parts by mass of the insect damage inhibitor.

When the insect damage inhibitor contains the solvent, the content of the component (A) in the insect damage inhibitor is not particularly limited. Examples of the content of the component (A) in the insect damage inhibitor, on a solid basis, include 90 parts by mass, 85 parts by mass, 80 parts by mass, 75 parts by mass, 70 parts by mass, 65 parts by mass, 60 parts by mass, 55 parts by mass, 50 parts by mass, 45 parts by mass, 40 parts by mass, 35 parts by mass, 30 parts by mass, 25 parts by mass, 20 parts by mass, 15 parts by mass, and 10 parts by mass, per 100 parts by mass of the insect damage inhibitor. In one embodiment, when the insect damage inhibitor contains the solvent, the content of the component (A) in the insect damage inhibitor, on a solid basis, is preferably about 10 to 90 parts by mass, per 100 parts by mass of the insect damage inhibitor.

When the insect damage inhibitor is the emulsion, the content of the component (B) in the insect damage inhibitor is not particularly limited. Examples of the content of the component (B) in the insect damage inhibitor, on a solid basis, include 20 parts by mass, 19 parts by mass, 18 parts by mass, 17 parts by mass, 16 parts by mass, 15 parts by mass, 14 parts by mass, 13 parts by mass, 12 parts by mass, 11 parts by mass, 10 parts by mass, 9 parts by mass, 8 parts by mass, 7 parts by mass, 6 parts by mass, 5 parts by mass, 4 parts by mass, 3 parts by mass, 2 parts by mass, and 1 part by mass, per 100 parts by mass of the component (A). In one embodiment, when the insect damage inhibitor is the emulsion, from the viewpoint of excellent emulsifiability, the content of the component (B) in the insect damage inhibitor, on a solid basis, is preferably about 1 to 20 parts by mass, and more preferably about 5 to 10 parts by mass, per 100 parts by mass of the component (A).

(Physical Properties and Applications of the Insect Damage Inhibitor)

The physical properties of the insect damage inhibitor are not particularly limited. In one embodiment, when the insect damage inhibitor contains the solvent, from the viewpoint of its excellent effect in controlling insect damage, the solid concentration of the insect damage inhibitor is preferably in the range of about 10 to 90% by mass.

When the insect damage inhibitor is the emulsion, its physical properties are not particularly limited. In one embodiment, the solid concentration of the insect damage inhibitor is typically about 10 to 65% by mass. In one embodiment, the volume-average particle size of the insect damage inhibitor is typically about 0.1 to 2 $\mu$m. The majority of the insect damage inhibitor is uniformly dispersed as particles of 1 $\mu$m or less. From the viewpoint of storage stability, the volume-average particle size of the insect damage inhibitor is preferably 0.7 $\mu$m or less. In one embodiment, the insect damage inhibitor has a white to milky-white appearance, a pH of about 2 to 10, and a viscosity of typically about 10 to 1000 mPa·s (at 25°C, with a solid concentration of 50%).

The applications of the insect damage inhibitor are not particularly limited. The applications of the insect damage inhibitor are, for example, agricultural and horticultural applications for the purpose of controlling insect damage in agricultural and horticultural crops. Agricultural and horticultural applications include application to pests, application to the stems, leaves, flowers, and/or roots of plants, and application to the soil for cultivating a plant are cultivated (hereinafter also simply referred to as cultivation soil). **It is** preferable that the agricultural and horticultural applications of the insect damage inhibitor of the present disclosure include application to the stems, leaves, flowers, or roots of plants. Moreover, it is preferable that the agricultural and horticultural applications of the insect damage inhibitor of the present disclosure include application to the soil for cultivating a plant.

Application of the insect damage inhibitor to pests includes, for example, spraying, scattering, and/or applying onto the pests.

Application of the insect damage inhibitor to the stems, leaves, flowers, and/or roots of plants includes, for example, spraying, scattering, and/or applying onto the stems, leaves, flowers, and/or roots, and injection treatment into the plants.

Application of the insect damage inhibitor to the cultivation soil includes, for example, scattering onto the cultivation soil, drenching treatment, and/or mixing with the cultivation soil. Note that the cultivation soil also includes "nursery soil" for growing seedlings that are intended to be transplanted to other soil. Moreover, the timing of application to the cultivation soil may be before sowing, or at any time during the period from after sowing/planting until harvest.

In one embodiment, from the viewpoint of the sustained effect in controlling insect damage, the insect damage inhibitor is preferably applied to the cultivation soil; from the same viewpoint, it is more preferably mixed with the cultivation soil; and from the same viewpoint, it is still more preferably mixed with the cultivation soil before sowing.

Regarding the application of the insect damage inhibitor to cultivation soil, the amount of the insect damage inhibitor used is not particularly limited. Examples of the amount of the insect damage inhibitor used, on a solid basis, include 5 parts by mass, 4 parts by mass, 3 parts by mass, 2 parts by mass, 1 part by mass, 0.9 parts by mass, 0.8 parts by mass, 0.7 parts by mass, 0.6 parts by mass, 0.5 parts by mass, 0.4 parts by mass, 0.3 parts by mass, 0.2 parts by mass, and 0.1 parts by mass, per 100 parts by mass of cultivation soil. In one embodiment, regarding the application of the insect damage inhibitor to cultivation soil, from the viewpoint of its excellent and sustained effect in controlling insect damage, the amount of the insect damage inhibitor used is preferably about 0.1 to 5 parts by mass, more preferably about 0.1 to 1 part by mass, and still more preferably about 0.4 to 1 part by mass, per 100 parts by mass of cultivation soil.

Regarding the application of the insect damage inhibitor to cultivation soil, examples of the amount of the insect damage inhibitor used, on a solid basis, include 5,000 kg, 4,500 kg, 4,000 kg, 3,500 kg, 3,000 kg, 2,500 kg, 2,000 kg, 1,500 kg, 1,000 kg, 900 kg, 800 kg, 700 kg, 600 kg, 500 kg, 400 kg, 300 kg, 200 kg, and 100 kg, per 10 a (10 ares, that is, 1,000 square meters) of cultivation soil. In one embodiment, regarding the application of the insect damage inhibitor to cultivation soil, from the viewpoint of its excellent and sustained effect in controlling insect damage, the amount of the insect damage inhibitor used is preferably about 40 to 5,000 kg, and more preferably about 40 to 1,000 kg, per 10 a of cultivation soil.

The target plants to which the insect damage inhibitor is applied are not particularly limited, as long as they are agricultural and horticultural crops. The agricultural and horticultural crops include, for example, cereals such as rice, barley, wheat, rye, and oats; potatoes and yams such as potato, sweet potato, taro, and yam; legumes such as soybean, adzuki bean, broad bean, pea, kidney bean, and peanut; corn, millet, buckwheat; Brassicaceae crops such as cabbage, Chinese cabbage, radish, turnip, broccoli, cauliflower, komatsuna, and radishes; Cucurbitaceae crops such as pumpkin, cucumber, watermelon, oriental melon, melon, zucchini, bottle gourd, and bitter gourd; Solanaceae crops such as eggplant, tomato, bell pepper, chili pepper, and shishito pepper; Malvaceae crops such as okra; Amaranthaceae crops such as spinach and chard; Apiaceae crops such as carrot, mitsuba, parsley, celery, and udo; Asteraceae crops such as lettuce and burdock; Alliums such as garlic, onion, green onion, chive, and rakkyo; asparagus, shiso, lotus root, and mushrooms such as shiitake and button mushrooms; fruit trees and fruits such as citrus fruits, apple, pear, peach, plum, cherry, prune, apricot, grape, persimmon, loquat, fig, akebia, blueberry, raspberry, pineapple, mango, kiwifruit, banana, strawberry, olive, walnut, chestnut, and almond; ornamental and aromatic crops such as lavender, rosemary, thyme, sage, pepper, and ginger; tobacco, tea, sugar beet, sugarcane, rush, sesame, konjac, hop, cotton, hemp, olive, rubber, coffee, rapeseed, sunflower, mulberry; legume pasture grasses such as timothy, clover, and alfalfa; gramineous pasture grasses such as corn, sorghum, and orchardgrass; turfgrasses such as zoysia and bentgrass; forest trees such as firs, spruces, pines, thujopsis, cedar, and cypress; herbaceous plants and flowers such as chrysanthemum, rose, carnation, lily, lisianthus, perennial baby's breath, statice, and orchid; and garden trees such as ginkgo, cherry trees, and Japanese laurel.

The target pests for the insect damage inhibitor are not particularly limited. Examples of the pests include those shown below. Moreover, the pests may be larvae or adults.

Hemipteran pests, for example, stink bugs (Heteroptera) such as the bean bug (Riptortus clavatus), the southern green stink bug (Nezara viridula), plant bugs (Lygus sp.), the American chinch bug (Blissus leucopterus), and the pear lace bug (Stephanitis nashi); leafhoppers such as the green rice leafhopper (Nephotettix cincticeps), and leafhoppers of the genera Empoasca, Erythroneura, and Circulifer; planthoppers such as the brown planthopper (Nilaparvata lugens), the white-backed planthopper (Sogatella furcifera), and the small brown planthopper (Laodelphax striatellus); psyllids such as Psylla sp.; whiteflies such as the tobacco whitefly (Bemisia tabaci) and the greenhouse whitefly (Trialeurodes vaporariorum); aphids such as the grape phylloxera (Viteus vitifolii), the green peach aphid (Myzus persicae), the apple aphid (Aphis pomi), the cotton aphid (Aphis gossypii), Aphis fabae, the false cabbage aphid (Rhopalosiphum pseudobrassicas), the potato aphid (Aulacorthum solani), and the greenbug (Schizaphis graminum); scale insects such as the Comstock mealybug (Pseudococcus comstocki), the ruby scale (Ceroplastes rubens), the San Jose scale (Comstockaspis perniciosa), and the arrowhead scale (Unaspis yanonensis); and assassin bugs (Rhodnius sp.),

Lepidopteran pests, for example, tortrix moths such as the tea tortrix (Homona magnanima), the smaller tea tortrix (Adoxophyes orana), Sparganothis pilleriana, the oriental fruit moth (Grapholita molesta), the soybean pod borer (Leguminivora glycinivorella), the codling moth (Laspeyresia pomonella), Eucosma sp., and Lobesia botrana; cochylid moths such as the grape berry moth (Eupoecillia ambiguella); bagworm moths such as Bambalina sp.; tineid moths such as the grain moth (Nemapogon granellus) and the case-bearing clothes moth (Tinea translucens); lyonetiid moths such as the apple leaf miner (Lyonetia prunifoliella); gracillariid moths such as the apple-leaf-miner (Phyllonorycter ringoniella); leaf blotch miners such as the citrus leafminer (Phyllocnistis citrella); ermine moths such as the diamondback moth (Plutella xylostella) and Prays citri; clearwing moths such as the grape clearwing moth (Paranthrene regalis) and Synanthedon sp.; gelechiid moths such as the pink bollworm (Pectinophora gossypiella), the potato tuber moth (Phthorimaea operculella), and Stomopteryx sp.; carposinid moths such as the peach fruit moth (Carposina niponensis); slug caterpillar moths such as Monema flavescens; pyralid moths such as the rice stem borer (Chilo suppressalis), the rice leaf folder (Cnaphalocrocis medinalis), Ostrinia nubilalis, the Asian corn borer (Ostrinia furnacalis), the striped cabbage webworm (Hellula undalis), the greater wax moth (Galleria mellonella), Elasmopalpus lignosellus, and Loxostege sticticalis; whites and sulphurs such as the imported cabbageworm (Pieris rapae); geometrid moths such as Ascotis selenaria; tent caterpillar moths such as the lackey moth (Malacosoma neustria); sphinx moths such as Manduca sexta; tussock moths such as the tea tussock moth (Euproctis pseudoconspersa) and the spongy moth (Lymantria dispar); tiger moths such as the fall webworm (Hyphantria cunea); noctuid moths such as the tobacco budworm (Heliothis virescens), the corn earworm (Helicoverpa zea), the beet armyworm (Spodoptera exigua), the cotton bollworm (Helicoverpa armigera), the tobacco cutworm (Spodoptera litura), the cabbage moth (Mamestra brassicae), the black cutworm (Agrotis ipsilon), the armyworm (Pseudaletia separata), and the cabbage looper (Trichoplusia ni); and prominent moths such as the buff-tip (Phalera flavescens).

Coleopteran pests, for example, scarab beetles such as the Anomala cuprea, the Japanese beetle (Popillia japonica), the oriental beetle (Anomala rufocuprea), and Eutheola rugiceps; click beetles such as wireworms (Agriotes sp.) and Conoderus sp.; ladybugs such as the 28-spotted potato ladybird (Epilachna vigintioctopunctata) and the Mexican bean beetle (Epilachna varivestis); darkling beetles such as the red flour beetle (Tribolium castaneum); longhorn beetles such as the white-spotted longicorn beetle (Anoplophora malasiaca) and the Japanese pine sawyer (Monochamus alternatus); bean weevils such as the common bean weevil (Acanthoscelides obtectus) and the adzuki bean weevil (Callosobruchus chinensis); leaf beetles such as the Colorado potato beetle (Leptinotarsa decemlineata), the corn rootworm (Diabrotica sp.), the rice leaf beetle (Oulema oryzae), the turnip flea beetle (Chaetocnema concinna), Phaedon cochleariae, Oulema melanopus, and Dicladispa armigera; weevils of the family Apionidae such as Apion godmani; weevils such as the rice water weevil (Lissorhoptrus oryzophilus) and the boll weevil (Anthonomus grandis); snout beetles such as the maize weevil (Sitophilus zeamais); bark beetles; skin beetles; and death-watch beetles, etc..

Dipteran pests, for example, the crane fly (Tipra ano), the rice midge (Tanytarsus oryzae), the rice gall midge (Orseolia oryzae), the Mediterranean fruit fly (Ceratitis capitata), the rice shore fly (Hydrellia griseola), the spotted wing drosophila (Drosophila suzukii), the frit fly (Oscinella frit), the rice stem maggot (Chlorops oryzae), the bean fly (Ophiomyia phaseoli), the pea leaf miner (Liriomyza trifolii), the beet leafminer (Pegomya hyoscyami), thoseedcorn maggot (Hylemia platura), the sorghum shoot fly (Atherigona soccata), the housefly (Musca domestica), the horse bot fly (Gastrophilus sp.), the stable fly (Stomoxys sp.), the yellow fever mosquito (Aedes aegypti), the common house mosquito (Culex pipiens), the Chinese anopheles (Anopheles sinensis), and the tritaeniorhynchus mosquito (Culex tritaeniorhynchus).

Hymenopteran pests, for example, stem sawflies (Cephus sp.), jointworms (Harmolita sp.), turnip sawflies (Athalia sp.), hornets (Vespa sp.), and fire ants.

Orthopteran pests, for example, the German cockroach (Blattella germanica), the American cockroach (Periplaneta americana), the African mole cricket (Gryllotalpa africana), the migratory locust (Locusta migratoria migratoriodes), and Melanoplus sanguinipes.

Isopteran pests, for example, the Japanese subterranean termite (Reticulitermes speratus) and the Formosan subterranean termite (Coptotermes formosanus).

Thysanopteran pests, for example, the yellow tea thrips (Scirtothrips dorsalis), the palm thrips (Thrips palmi), the greenhouse thrips (Heliothrips haemorrhoidalis), the western flower thrips (Frankliniella occidentalis), and the rice thrips (Haplothrips aculeatus).

Spider mites, for example, the two-spotted spider mite (Tetranychus urticae), the Kanzawa spider mite (Tetranychus kanzawai), the citrus red mite (Panonychus citri), the European red mite (Panonychus ulmi), the yellow mite (Eotetranychus carpini), the Texas citrus mite (Eotetranychus banksi), the citrus rust mite (Phyllocoptruta oleivora), the broad mite (Polyphagotarsonemus latus), false spider mites (Brevipalpus sp.), the bulb mite (Rhizoglyphus robini), and the mould mite (Tyrophagus putrescentiae).

Plant-parasitic nematodes, for example, the southern root-knot nematode (Meloidogyne incognita), lesion nematodes (Pratylenchus sp.), the soybean cyst nematode (Heterodera glycines), the rice white-tip nematode (Aphelenchoides besseyi), the pinewood nematode (Bursaphelenchus xylophilus), Radopholus similis, the stem and bulb nematode (Ditylenchus dipsaci), the citrus nematode (Tylenchulus semipenetrans), Globodera spp., root-knot nematodes (Meloidogyne spp.), Aphelenchoides spp., Longidorus spp., Xiphinema spp., Trichodorus spp., and Bursaphelenchus spp..

Other harmful animals, nuisance animals, sanitary pests, and parasites, for example, Gastropods (Gastropoda) such as the channeled apple snail (Pomacea canaliculata), slugs (Incilaria sp.), and the giant African snail (Achatina fulica); Isopods (Isopoda) such as pill bugs (Armadillidium sp.), woodlice, and centipedes; booklice such as Liposcelis sp.; silverfish such as Ctenolepisma sp.; fleas such as Pulex sp. and Ctenocephalides sp.; chewing lice such as Trichodectes sp.; bed bugs such as Cimex sp.; animal-parasitic ticks such as the southern cattle tick (Boophilus microplus) and the longhorned tick (Haemaphysalis longicornis); and house dust mites can be mentioned.

(Method for Producing the Insect Damage Inhibitor)

A method for producing the insect damage inhibitor is not particularly limited. The insect damage inhibitor may be obtained by using the component (A) as is, or it may be obtained by mixing the component (A) with the solvent and the additives as necessary, and a method for mixing them is also not particularly limited. Note that the organic solvent used in the method for producing the component (A) may be used as is as the solvent in the insect damage inhibitor.

When the insect damage inhibitor is the emulsion, the method for producing the insect damage inhibitor is not particularly limited as long as it is a method of emulsifying the component (A) and, if necessary, the additives in water in the presence of the component (B). The emulsification method is not particularly limited. As the emulsification method, known emulsification methods such as a high-pressure emulsification method or a phase-inversion emulsification method can be employed.

The high-pressure emulsification method is a method in which, after bringing the component (A) into a liquid state, the component (B) and water are premixed, then finely emulsified using a high-pressure emulsifier, and then the solvent is removed as necessary. The method of bringing the component (A) into a liquid state may be by heating alone, by dissolving it in a solvent and then heating, or by mixing it with a non-volatile substance such as a plasticizer and then heating. Examples of the solvent include organic solvents that can dissolve the component (A), such as toluene, xylene, methylcyclohexane, and ethyl acetate.

The phase-inversion emulsification method is a method in which, after heating and melting the component (A), a surfactant and water are added while stirring to first form a W/O emulsion, and then, by means of adding more water or changing the temperature, it is phase-inverted into an O/W emulsion.

(Formulation Form of the Insect Damage Inhibitor)

For the insect damage inhibitor, the component (A) itself may be used, but as long as the effects of the present disclosure are not impaired, it may be formulated to be used more conveniently.

The formulation form of the insect damage inhibitor is not particularly limited. Examples of the formulation form include the aforementioned emulsion and forms commonly used for pesticides, specifically, granules, fine granules, wettable powders, water-dispersible granules, flowable concentrates, dry flowables, soluble concentrates, soluble granules, emulsifiable concentrates, oil-in-water emulsions (EW), liquid formulations, microemulsions (ME), oil-based formulations (Surf), pastes, aerosols, microcapsules, and pack formulations.

The insect damage inhibitor may contain necessary auxiliary agents depending on its formulation form. Examples of such auxiliary agents include carriers such as solid carriers and liquid carriers, surfactants, dispersing agents, wetting agents, binders, thickening agents, coloring agents, extenders, spreading agents, antifreeze agents, anticaking agents, disintegrating agents, and decomposition inhibitors. The insect damage inhibitor may also use preservatives, plant fragments, or the like, as additional components as necessary. Those auxiliary agents may be used in combination.

Examples of the solid carrier include: natural minerals such as quartz, clay, kaolinite, pyrophyllite, sericite, talc, bentonite, acid clay, attapulgite, zeolite, and diatomaceous earth; inorganic salts such as calcium carbonate, ammonium sulfate, sodium sulfate, and potassium chloride; organic solid carriers such as synthetic silicic acid, synthetic silicates, starch, cellulose, and plant powders (for example, sawdust, coconut husk, corncob, and tobacco stem); plastic carriers such as polyethylene, polypropylene, and polyvinylidene chloride; and urea, inorganic hollow bodies, plastic hollow bodies, and fumed silica (white carbon).

Examples of the liquid carrier include: the aforementioned solvents; lactones such as γ-butyrolactone; amides such as dimethylformamide, diethylformamide, dimethylacetamide, and N-alkylpyrrolidinone; nitriles such as acetonitrile; sulfur compounds such as dimethyl sulfoxide; and vegetable oils such as soybean oil, rapeseed oil, cottonseed oil, and castor oil.

Examples of surfactants used as the dispersing agents or wetting agents include: nonionic surfactants such as sorbitan fatty acid esters, polyoxyethylene sorbitan fatty acid esters, sucrose fatty acid esters, polyoxyethylene fatty acid esters, polyoxyethylene resin acid esters, polyoxyethylene fatty acid diesters, polyoxyethylene alkyl ethers, polyoxyethylene alkyl aryl ethers, polyoxyethylene alkylphenyl ethers, polyoxyethylene dialkylphenyl ethers, polyoxyethylene alkylphenyl ether formalin condensates, polyoxyethylene-polyoxypropylene block copolymers, polystyrene-polyoxyethylene block polymers, alkyl polyoxyethylene-polyoxypropylene block copolymer ethers, polyoxyethylene alkylamines, polyoxyethylene fatty acid amides, polyoxyethylene fatty acid bisphenyl ethers, polyalkylene benzyl phenyl ethers, polyoxyalkylene styrylphenyl ethers, acetylene diols, polyoxyalkylene-adducted acetylene diols, polyoxyethylene ether-type silicones, ester-type silicones, fluorinated surfactants, polyoxyethylene castor oil, and polyoxyethylene hardened castor oil; anionic surfactants such as alkyl sulfates, polyoxyethylene alkyl ether sulfates, polyoxyethylene alkylphenyl ether sulfates, polyoxyethylene styrylphenyl ether sulfates, alkylbenzene sulfonates, alkyl aryl sulfonates, lignin sulfonates, alkyl sulfosuccinates, naphthalene sulfonates, alkylnaphthalene sulfonates, salts of formalin condensates of naphthalene sulfonic acid, salts of formalin condensates of alkylnaphthalene sulfonic acid, fatty acid salts, polycarboxylates, polyacrylates, N-methyl-fatty acid sarcosinates, resin acid salts, polyoxyethylene alkyl ether phosphates, and polyoxyethylene alkylphenyl ether phosphates; cationic surfactants such as laurylamine hydrochloride, stearylamine hydrochloride, oleylamine hydrochloride, stearylamine acetate, stearylaminopropylamine acetate, and alkylamine salts like alkyltrimethylammonium chlorides, and alkyldimethylbenzalkonium chlorides; and amphoteric surfactants such as amino acid-type or betaine-type surfactants.

Examples of the binders include carboxymethylcellulose and its salts, dextrin, water-soluble starch, xanthan gum, guar gum, sucrose, polyvinylpyrrolidone, gum arabic, polyvinyl alcohol, polyvinyl acetate, polyethylene glycol with an average molecular weight of 6,000 to 20,000, polyethylene oxide with an average molecular weight of 100,000 to 5,000,000, phospholipids (for example, cephalin and lecithin), cellulose powder, dextrin, modified starch, polyaminocarboxylic acid chelate compounds, cross-linked polyvinylpyrrolidone, copolymers of maleic acid and styrenes, (meth) acrylic acid-based copolymers, half-esters of polymers composed of polyhydric alcohols and dicarboxylic acid anhydrides, water-soluble salts of polystyrene sulfonic acid, paraffin, terpenes, polyamide resins, poly(meth)acrylates, poly(meth)acrylamides, copolymers of (meth)acrylamide and (meth)acrylates copolymerizable with (meth)acrylamide, polyoxyethylene, waxes, polyvinyl alkyl ethers, alkylphenol-formalin condensates, and synthetic resin emulsions.

Examples of the thickening agents include water-soluble polymers such as xanthan gum, guar gum, diutan gum, carboxymethylcellulose, polyvinylpyrrolidone, carboxyvinyl polymers, acrylic polymers, starch derivatives, and polysaccharides; and fine inorganic powders such as high-purity bentonite and fumed silica (white carbon).

Examples of the coloring agents include inorganic pigments such as iron oxide, titanium oxide, and Prussian blue; and organic dyes such as alizarin dyes, azo dyes, and metal phthalocyanine dyes.

Examples of the antifreeze agents include polyhydric alcohols such as ethylene glycol, diethylene glycol, propylene glycol, and glycerin.

Examples of the auxiliary agents for anti-caking and disintegration promotion include polysaccharides such as starch, alginic acid, mannose, and galactose; polyvinylpyrrolidone; fumed silica (white carbon); ester gum; petroleum resins; sodium tripolyphosphate; sodium hexametaphosphate; metal salts of stearic acid; cellulose powder; dextrin; copolymers of methacrylic acid esters; polyvinylpyrrolidone; polyaminocarboxylic acid chelate compounds; sulfonated styrene-isobutylene-maleic anhydride copolymers; and starch-polyacrylonitrile graft copolymers.

Examples of the decomposition inhibitors include drying agents such as zeolite, quicklime, and magnesium oxide; antioxidants such as phenolic compounds, amine compounds, sulfur compounds, and phosphorus compounds; and ultraviolet absorbers such as salicylic acid compounds and benzophenone compounds.

Examples of the preservatives include potassium sorbate and 1,2-benzisothiazolin-3-one. The insect damage inhibitor may also, as necessary, use other auxiliary agents such as functional spreading agents; activity enhancers such as metabolic degradation inhibitors like piperonyl butoxide; antifreeze agents such as propylene glycol; antioxidants such as BHT; and ultraviolet absorbers.

The insect damage inhibitor may also be used by mixing or combining it with other known active compounds, pesticides other than the insect damage inhibitor (for example, fungicides, insecticides, herbicides, acaricides, synergists, safeners, and plant growth regulators), fertilizers, soil conditioners, and the like.

[Method for Using Resin Composition]

The present disclosure relates to a method for using a resin composition (hereinafter also simply referred to as a method of use) for controlling insect damage using a resin composition containing a rosin-based resin (A). A total amount of volatile components in the rosin-based resin (A) when held at 80°C for 10 minutes is 1 μg or more per 1g of resin. The method for using the resin composition is for agricultural and horticultural applications. By using the resin composition as an insect damage inhibitor, an excellent and sustained insect damage control effect is exhibited against pests of agricultural and horticultural crops.

(Resin Composition)

The resin composition is not particularly limited as long as it is a composition containing the component (A).

In one embodiment, from the viewpoint of its excellent and sustained effect in controlling insect damage, the component (A) preferably comprises at least one selected from the group consisting of natural rosin, hydrogenated rosin, disproportionated rosin, polymerized rosin, α,β-unsaturated carboxylic acid-modified rosin, rosin esters, alkali metal salts of rosins, and alkaline earth metal salts of rosins. Note that the natural rosin, the hydrogenated rosin, the disproportionated rosin, the polymerized rosin, the a,r3-unsaturated carboxylic acid-modified rosin, the rosin esters, the alkali metal salts of rosins, and the alkaline earth metal salts of rosins are not particularly limited. Examples of those include the same as those mentioned above in connection with the disclosure of the insect damage inhibitor.

(Solvent)

The resin composition, by further containing a solvent, may be in the form of a dispersible composition such as a solution or an emulsion. Examples of the solvent include those mentioned above in connection with the disclosure of the insect damage inhibitor.

In one embodiment, from the viewpoints of its excellent effect in controlling insect damage and its ability to reduce environmental load, the solvent is preferably water.

(Emulsion)

When the resin composition contains water as a solvent, the resin composition is preferably an emulsion containing water and a surfactant. The surfactant is not particularly limited. Examples of the surfactant include the component (B) as mentioned above in connection with the disclosure of the insect damage inhibitor.

(Additives)

The resin composition may further contain various additives, as long as the effects of the present disclosure are not impaired, such as antifoaming agents, viscosity modifiers, fillers, antioxidants, water-resisting agents, film-forming aids, preservatives, pH adjusters like aqueous ammonia and sodium bicarbonate, surfactants, anti-aging agents, ultraviolet absorbers, antioxidants, and light stabilizers. Those additives may be used in combination.

(Content of Each Component)

The content of the component (A) in the resin composition is not particularly limited. Examples of the content of the component (A) in the resin composition include 100 parts by mass, 95 parts by mass, 90 parts by mass, 85 parts by mass, 80 parts by mass, 75 parts by mass, 70 parts by mass, 65 parts by mass, 60 parts by mass, 55 parts by mass, 50 parts by mass, 45 parts by mass, 40 parts by mass, 35 parts by mass, 30 parts by mass, 25 parts by mass, 20 parts by mass, and 15 parts by mass, per 100 parts by mass of the resin composition. In one embodiment, from the viewpoint of its excellent and sustained effect in controlling insect damage, the content of the component (A) in the resin composition is preferably about 15 to 100 parts by mass, from the same viewpoint, more preferably about 55 to 100 parts by mass, and from the same viewpoint, still more preferably about 80 to 100 parts by mass, per 100 parts by mass of the resin composition.

When the resin composition contains the solvent, the content of the component (A) in the resin composition is not particularly limited. Examples of the content of the component (A) in the resin composition, on a solid basis, include 90 parts by mass, 85 parts by mass, 80 parts by mass, 75 parts by mass, 70 parts by mass, 65 parts by mass, 60 parts by mass, 55 parts by mass, 50 parts by mass, 45 parts by mass, 40 parts by mass, 35 parts by mass, 30 parts by mass, 25 parts by mass, 20 parts by mass, 15 parts by mass, and 10 parts by mass, per 100 parts by mass of the resin composition. In one embodiment, when the resin composition contains the solvent, the content of the component (A) in the resin composition, on a solid basis, is preferably about 10 to 90 parts by mass, per 100 parts by mass of the resin composition.

When the resin composition is the emulsion, the content of the component (B) in the resin composition is not particularly limited. Examples of the content of the component (B) in the resin composition, on a solid basis, include 20 parts by mass, 19 parts by mass, 18 parts by mass, 17 parts by mass, 16 parts by mass, 15 parts by mass, 14 parts by mass, 13 parts by mass, 12 parts by mass, 11 parts by mass, 10 parts by mass, 9 parts by mass, 8 parts by mass, 7 parts by mass, 6 parts by mass, 5 parts by mass, 4 parts by mass, 3 parts by mass, 2 parts by mass, and 1 part by mass, per 100 parts by mass of component (A). In one embodiment, when the resin composition is the emulsion, from the viewpoint of excellent emulsifiability, the content of the component (B), on a solid basis, is preferably about 1 to 20 parts by mass, and more preferably about 5 to 10 parts by mass, per 100 parts by mass of the component (A).

(Physical Properties of the Resin Composition)

The physical properties of the resin composition are not particularly limited. In one embodiment, when the resin composition contains the solvent, from the viewpoint of its excellent effect in controlling insect damage, the solid concentration of the resin composition is preferably in the range of about 10 to 90% by mass.

When the resin composition is the emulsion, its physical properties are not particularly limited. In one embodiment, the solid concentration of the resin composition is typically about 10 to 65% by mass. In one embodiment, the volume-average particle size of the resin composition is typically about 0.1 to 2 μm, and the majority is uniformly dispersed as particles of 1 μm or less. From the viewpoint of storage stability, the volume-average particle size of the insect damage inhibitor is preferably 0.7 μm or less. In one embodiment, the resin composition has a white to milky-white appearance, a pH of about 2 to 10, and a viscosity of typically about 10 to 1000 mPa·s (at 25°C, with a solid concentration of 50%).

(Method for Producing the Resin Composition)

The method for producing the resin composition is not particularly limited. The resin composition may be obtained by using the component (A) as is, or by mixing the component (A) with the solvent and additives as necessary, and the method for mixing them is also not particularly limited. Note that the organic solvent used in the method for producing the component (A) may be used as is as the solvent in the composition.

When the composition is the emulsion, the method for producing the composition is not particularly limited as long as it is a method of emulsifying the component (A) and, if necessary, the additives in water in the presence of the component (B). The emulsification method is not particularly limited. As the emulsification method, known emulsification methods such as the high-pressure emulsification method and the phase-inversion emulsification method can be employed.

(Formulation Form of the Resin Composition)

For the resin composition, the component (A) itself may be used, but as long as the effects of the present disclosure are not impaired, it may be formulated to be used more conveniently. The formulation form of the resin composition is not particularly limited. Examples of the formulation form include those mentioned above in connection with the disclosure of the insect damage inhibitor.

The resin composition may contain necessary auxiliary agents depending on its formulation form. Examples of such auxiliary agents include those mentioned above in connection with the disclosure of the insect damage inhibitor.

The resin composition may also be used by mixing or combining it with other known active compounds, pesticides other than the aforementioned composition (for example, fungicides, insecticides, herbicides, acaricides, synergists, safeners, plant growth regulators, and the like), fertilizers, soil conditioners, and the like.

(Method for Using the Resin Composition)

The method of use is a method of use for agricultural and horticultural applications. Specifically, examples of the method of use include a method of applying the resin composition to pests, a method of applying the resin composition to the stems, leaves, flowers, and/or roots of plants, and a method of applying the resin composition to the cultivation soil.

The method of applying the resin composition to pests includes, for example, spraying, scattering, and/or applying the resin composition onto the pests.

The method of applying the resin composition to the stems, leaves, flowers, and/or roots of plants includes, for example, spraying, scattering, and/or applying the resin composition onto the stems, leaves, flowers, and/or roots, and injection treatment into the plants.

The method of applying the resin composition to cultivation soil includes, for example, scattering the resin composition onto the cultivation soil, drenching treatment, and/or mixing with the cultivation soil. Note that the cultivation soil also includes "nursery soil" for growing seedlings that are intended to be transplanted to other soil. Moreover, the timing of application to the cultivation soil may be before sowing, or at any time during the period from after sowing/planting until harvest.

In one embodiment, from the viewpoint of the sustained effect in controlling insect damage, the method of use is preferably a method of applying the resin composition to the cultivation soil; from the same viewpoint, the method is more preferably a method of mixing the resin composition with the cultivation soil; and from the same viewpoint, it is still more preferably a method of mixing the resin composition with the cultivation soil before sowing.

In the method of applying the resin composition to the cultivation soil, the amount of the resin composition used is not particularly limited. Examples of the amount of the resin composition used, on a solid basis, include 5 parts by mass, 4 parts by mass, 3 parts by mass, 2 parts by mass, 1 part by mass, 0.9 parts by mass, 0.8 parts by mass, 0.7 parts by mass, 0.6 parts by mass, 0.5 parts by mass, 0.4 parts by mass, 0.3 parts by mass, 0.2 parts by mass, and 0.1 parts by mass, per 100 parts by mass of cultivation soil. In one embodiment, in the method of applying the resin composition to the cultivation soil, from the viewpoint of its excellent and sustained effect in controlling insect damage, the amount of the resin composition used is preferably about 0.1 to 5 parts by mass, more preferably about 0.1 to 1 part by mass, and still more preferably about 0.4 to 1 part by mass, per 100 parts by mass of cultivation soil.

In the method of applying the resin composition to the cultivation soil, examples of the amount of the resin composition used, on a solid basis, include 5,000 kg, 4,500 kg, 4,000 kg, 3,500 kg, 3,000 kg, 2,500 kg, 2,000 kg, 1,500 kg, 1,000 kg, 900 kg, 800 kg, 700 kg, 600 kg, 500 kg, 400 kg, 300 kg, 200 kg, and 100 kg, per 10 a of cultivation soil. In one embodiment, in the method of applying the resin composition to the cultivation soil, from the viewpoint of its excellent and sustained effect in controlling insect damage, the amount of the resin composition used is preferably about 40 to 5,000 kg, and more preferably about 40 to 1,000 kg, per 10 a of cultivation soil.

In the method of use, the target plants to which the resin composition is applied are not particularly limited as long as they are agricultural and horticultural crops. Examples of the agricultural and horticultural crops include those mentioned above in connection with the disclosure of the insect damage inhibitor.

The target pests for the method of use are not particularly limited. Examples of the pests include those mentioned above in connection with the disclosure of the insect damage inhibitor.

In one embodiment, the insect damage inhibitor preferably comprises at least one selected from the group consisting of a pest repellent, a pest reproduction inhibitor, and an insecticide.

[Cultivation Method]

The cultivation method of the present disclosure is a method for cultivating a plant for agricultural and horticultural applications in soil. The cultivation method is a method that comprises blending the insect damage inhibitor into the soil.

Because the cultivation method involves cultivating plants in soil containing the insect damage inhibitor, it can control insect damage by pests and can promote and/or improve the germination rate of seeds and the growth state of plants.

The soil containing the insect damage inhibitor is obtained by adding the insect damage inhibitor to the soil. The method for adding the insect damage inhibitor to the soil is not particularly limited. The addition method is performed, for example, by methods such as scattering the insect damage inhibitor onto the soil, drenching, and/or mixing. Moreover, the timing of addition to the soil may be before sowing, or at any time during the period from after sowing/planting until harvest.

In one embodiment, from the viewpoint of its excellent and sustained effect in controlling insect damage, the method for adding the insect damage inhibitor to the soil is preferably a method of mixing the insect damage inhibitor with the soil before sowing.

The target plants for the cultivation method are not particularly limited as long as they are agricultural and horticultural crops. Examples of the agricultural and horticultural crops include those mentioned above in connection with the disclosure of the insect damage inhibitor.

In the cultivation method, the amount of the insect damage inhibitor used is not particularly limited. Examples of the amount of the insect damage inhibitor used in the cultivation method, on a solid basis, include 5 parts by mass, 4 parts by mass, 3 parts by mass, 2 parts by mass, 1 part by mass, 0.9 parts by mass, 0.8 parts by mass, 0.7 parts by mass, 0.6 parts by mass, 0.5 parts by mass, 0.4 parts by mass, 0.3 parts by mass, 0.2 parts by mass, and 0.1 parts by mass, per 100 parts by mass of soil. In one embodiment, in the cultivation method, from the viewpoint of its excellent and sustained effect in controlling insect damage, the amount of the insect damage inhibitor used is preferably about 0.1 to 5 parts by mass, more preferably about 0.1 to 1 part by mass, and still more preferably about 0.4 to 1 part by mass, per 100 parts by mass of soil.

In the cultivation method, examples of the amount of the insect damage inhibitor used, on a solid basis, include 5,000 kg, 4,500 kg, 4,000 kg, 3,500 kg, 3,000 kg, 2,500 kg, 2,000 kg, 1,500 kg, 1,000 kg, 900 kg, 800 kg, 700 kg, 600 kg, 500 kg, 400 kg, 300 kg, 200 kg, and 100 kg, per 10 a of soil. In one embodiment, in the cultivation method, from the viewpoint of its excellent and sustained effect in controlling insect damage, the amount of the insect damage inhibitor used is preferably about 40 to 5,000 kg, and more preferably about 40 to 1,000 kg, per 10 a of cultivation soil.

[Potting Soil]

The potting soil of the present disclosure is used for agricultural and horticultural applications. The potting soil comprises soil and the insect damage inhibitor.

The potting soil contains the insect damage inhibitor. Thus, when sowing or cultivating plants using the potting soil, insect damage by pests can be controlled, and the germination rate of seeds and the growth state of plants can be promoted and/or improved.

The soil is not particularly limited. The soils may be used in combination.

Examples of the soil include Kanuma soil, Akadama soil, Hyuga soil, black soil, Shirakawa sand, Kiryu sand, Yahagi sand, river sand, mountain sand, gravel, leaf mold, bark, cryptomoss, peat moss, lime, pumice, mountain moss, sphagnum moss, keto soil, volcanic ash, smoked ash, perlite, vermiculite, zeolite, osmunda, Dream Ball, baked Akadama, clay balls, hydro balls, and commercially available mixed potting soils.

The potting soil may also be one mixed with dolomitic lime, peat moss, fertilizers, pesticides, and the like.

The content of the insect damage inhibitor in the potting soil is not particularly limited. Examples of the content of the insect damage inhibitor in the potting soil, on a solid basis, include 5 parts by mass, 4 parts by mass, 3 parts by mass, 2 parts by mass, 1 part by mass, 0.9 parts by mass, 0.8 parts by mass, 0.7 parts by mass, 0.6 parts by mass, 0.5 parts by mass, 0.4 parts by mass, 0.3 parts by mass, 0.2 parts by mass, and 0.1 parts by mass, per 100 parts by mass of soil. In one embodiment, in the potting soil, from the viewpoint of its excellent and sustained effect in controlling insect damage, the content of the insect damage inhibitor is preferably about 0.1 to 5 parts by mass, more preferably about 0.1 to 1 part by mass, and still more preferably about 0.4 to 1 part by mass, per 100 parts by mass of soil.

Examples of the content of the insect damage inhibitor in the potting soil, on a solid basis, include 5,000 kg, 4,500 kg, 4,000 kg, 3,500 kg, 3,000 kg, 2,500 kg, 2,000 kg, 1,500 kg, 1,000 kg, 900 kg, 800 kg, 700 kg, 600 kg, 500 kg, 400 kg, 300 kg, 200 kg, and 100 kg, per 10 a of soil. In one embodiment, in the potting soil, from the viewpoint of its excellent and sustained effect in controlling insect damage, the content of the insect damage inhibitor is preferably about 40 to 5,000 kg, and more preferably about 40 to 1,000 kg, per 10 a of soil.

The potting soil is obtained by adding the insect damage inhibitor to the soil. The method for adding the insect damage inhibitor to the soil is not particularly limited. The addition method is performed, for example, by methods such as scattering the insect damage inhibitor onto the soil, drenching, and/or mixing.

[Method for Improving Soil]

The present disclosure relates to a method for improving soil (hereinafter also referred to as a soil improvement method). The soil is soil for cultivating a plant for agricultural and horticultural applications. Moreover, the insect damage inhibitor is applied to the soil.

The soil improvement method applies the insect damage inhibitor to the soil. Thus, when sowing or cultivating plants using the improved soil, insect damage by pests can be controlled, and the germination of seeds and the growth of plants can be promoted and/or improved.

The soil is not particularly limited. The soils may be used in combination. Examples of the soil include those mentioned above in connection with the disclosure of potting soil.

The method of applying the insect damage inhibitor to the soil is not particularly limited. Examples of the application method include methods such as scattering the insect damage inhibitor onto the soil, drenching, and/or mixing.

Regarding the application of the insect damage inhibitor to soil, the amount of the insect damage inhibitor used is not particularly limited. Examples of the amount of the insect damage inhibitor used, on a solid basis, include 5 parts by mass, 4 parts by mass, 3 parts by mass, 2 parts by mass, 1 part by mass, 0.9 parts by mass, 0.8 parts by mass, 0.7 parts by mass, 0.6 parts by mass, 0.5 parts by mass, 0.4 parts by mass, 0.3 parts by mass, 0.2 parts by mass, and 0.1 parts by mass, per 100 parts by mass of soil. In one embodiment, from the viewpoint of its excellent and sustained effect in controlling insect damage, the amount of the insect damage inhibitor used is preferably about 0.1 to 5 parts by mass, more preferably about 0.1 to 1 part by mass, and still more preferably about 0.4 to 1 part by mass, per 100 parts by mass of soil.

Regarding the application of the insect damage inhibitor to soil, examples of the amount of the insect damage inhibitor used, on a solid basis, include 5,000 kg, 4,500 kg, 4,000 kg, 3,500 kg, 3,000 kg, 2,500 kg, 2,000 kg, 1,500 kg, 1,000 kg, 900 kg, 800 kg, 700 kg, 600 kg, 500 kg, 400 kg, 300 kg, 200 kg, and 100 kg, per 10 a of soil. In one embodiment, from the viewpoint of its excellent and sustained effect in controlling insect damage, the amount of the insect damage inhibitor used is preferably about 40 to 5,000 kg, and more preferably about 40 to 1,000 kg, per 10 a of cultivation soil.

The present disclosure provides the following items.

(Item A1)

An insect damage inhibitor for use in agricultural and horticultural applications to control insect damage, the insect damage inhibitor comprising a rosin-based resin (A),
wherein a total amount of volatile components of the rosin-based resin (A) when held at 80°C for 10 minutes is 1 $\mu$g or more per 1g of resin.

(Item A2)

The insect damage inhibitor according to the above item, wherein the rosin-based resin (A) contains at least one selected from the group consisting of natural rosin, hydrogenated rosin, disproportionated rosin, polymerized rosin, $\alpha,\beta$-unsaturated carboxylic acid-modified rosin, rosin esters, alkali metal salts of rosins, and alkaline earth metal salts of rosins.

(Item A3)

The insect damage inhibitor according to any of the above items, wherein the rosin esters do not include a rosin polyoxyalkylene ester.

(Item A4)

The insect damage inhibitor according to any of the above items, wherein the total amount of volatile components in the rosin-based resin (A) when held at 80°C for 10 minutes is 1 to 50 $\mu$g per 1g of resin.

(Item A5)

The insect damage inhibitor according to any of the above items, wherein a softening point (°C) of the rosin-based resin (A) is 70 to 180°C.

(Item A6)

The insect damage inhibitor according to any of the above items, further comprising a surfactant (B) and water.

(Item A7)

The insect damage inhibitor according to any of the above items, wherein a content of the rosin-based resin (A) in the insect damage inhibitor is 55 to 100 parts by mass, per 100 parts by mass of the insect damage inhibitor.

(Item A8)

The insect damage inhibitor according to any of the above items, which is applied to pests.

(Item A9)

The insect damage inhibitor according to any of the above items, wherein the agricultural and horticultural applications comprise application to the stems, leaves, flowers, or roots of a plant.

(Item A10)

The insect damage inhibitor according to any of the above items, wherein the agricultural and horticultural applications include application to soil for cultivating a plant.

(Item A11)

The insect damage inhibitor according to any of the above items, comprising at least one selected from the group consisting of a pest repellent, a pest reproduction inhibitor, and an insecticide.

(Item A12)

The insect damage inhibitor according to any of the above items, wherein the pest repellent is applied to the soil for cultivating a plant.

(Item A13)

The insect damage inhibitor according to any of the above items, wherein the pest reproduction inhibitor is applied to pests.

(Item A14)

The insect damage inhibitor according to any of the above items, wherein the insecticide is applied to pests.

(Item A15)

A method for using a resin composition, the method comprising using a resin composition containing a rosin-based resin (A) to control insect damage,

wherein a total amount of volatile components in the rosin-based resin (A) when held at 80°C for 10 minutes is 1 μg or more per 1g of resin, and
wherein the method is for agricultural and horticultural applications.

(Item A16)

The method for using a resin composition according to the above item, wherein the rosin-based resin (A) comprises at least one selected from the group consisting of natural rosin, hydrogenated rosin, disproportionated rosin, polymerized rosin, α,β-unsaturated carboxylic acid-modified rosin, rosin esters, alkali metal salts of rosins, and alkaline earth metal salts of rosins.

(Item A17)

The method for using a resin composition according to any of the above items, wherein the rosin esters do not include a rosin polyoxyalkylene ester.

(Item A18)

The method for using a resin composition according to any of the above items, wherein the total amount of volatile components in the rosin-based resin (A) when held at 80°C for 10 minutes is 1 to 50 μg per 1g of resin.

(Item A19)

The method for using a resin composition according to any of the above items, wherein a softening point (°C) of the rosin-based resin (A) is 70 to 180°C.

(Item A20)

The method for using a resin composition according to any of the above items, wherein the resin composition comprises a surfactant (B) and water.

(Item A21)

The method for using a resin composition according to any of the above items, wherein a content of the rosin-based resin (A) in the resin composition is 55 to 100 parts by mass, per 100 parts by mass of the resin composition.

(Item A22)

The method for using a resin composition according to any of the above items, wherein the resin composition is applied to pests.

(Item A23)

The method for using a resin composition according to any of the above items, wherein the resin composition is applied to the stems, leaves, flowers, or roots of a plant.

(Item A24)

The method for using a resin composition according to any of the above items, wherein the resin composition is applied to soil for cultivating a plant.

(Item A25)

The method for using a resin composition according to any of the above items, wherein the resin composition is applied as at least one selected from the group consisting of a pest repellent, a pest reproduction inhibitor, and an insecticide.

(Item A26)

The method for using a resin composition according to any of the above items, wherein the resin composition is applied as the pest repellent to the soil for cultivating a plant.

(Item A27)

The method for using a resin composition according to any of the above items, wherein the resin composition is applied as the pest reproduction inhibitor to pests.

(Item A28)

The method for using a resin composition according to any of the above items, wherein the resin composition is applied as the insecticide to pests.

(Item A29)

A method for cultivating a plant for agricultural and horticultural applications in soil, the method comprising blending the insect damage inhibitor of any of the above items into the soil.

(Item A30)

A potting soil for use in agricultural and horticultural applications, comprising soil and the insect damage inhibitor of any of the above items.

(Item A31)

A method for improving soil,

wherein the soil is soil for cultivating a plant for agricultural and horticultural applications, and

wherein the insect damage inhibitor of any of the above items is applied.

The insect damage inhibitor provided by the present disclosure has an excellent insect damage control effect against pests of agricultural and horticultural crops, and this effect is sustained for a long period. Thus, the insect damage inhibitor can be used less frequently and is convenient to use. Moreover, because the insect damage inhibitor provided by the present disclosure uses a rosin-based resin, which is a biomass material, its environmental load is reduced.

EXAMPLE

Now, the present invention is described more in detail with Examples and Comparative examples. The present invention is not limited to those Examples. Unless otherwise particularly noted, the expressions of "parts" and "%" in Examples are on the basis of mass.

[Manufacture of Insect Damage Inhibitor]

Example 1

Chinese gum rosin (A1) with a softening point of 74°C (hereinafter referred to as a component (A1)) was used as is as the insect damage inhibitor.

Example 2

Into a reaction apparatus equipped with a thermometer, a stirrer, a nitrogen inlet tube, and a pressure-reducing device, 500 parts of Chinese gum rosin and 60 parts of glycerin were charged. The temperature was raised to 270°C under a nitrogen atmosphere, and after reacting at that temperature for 12 hours, the pressure was reduced to 8 kPa and the reaction was continued for another 2 hours to obtain a rosin glycerin ester (A2) (hereinafter referred to as a component (A2)) with a softening point of 82°C.

Example 3

A commercially available magnesium rosinate (A3) (manufactured by Arakawa Chemical Industries, Ltd., product name "KM-1600") (hereinafter referred to as a component (A3)) was used as is as the insect damage inhibitor.

Example 4

Into a reaction apparatus equipped with a thermometer, a stirrer, a nitrogen inlet tube, and a pressure-reducing device, 1000 parts of Chinese gum rosin and 0.3 parts of 5% palladium-on-carbon (with a water content of 50%) as a disproportionation catalyst were added; under a nitrogen seal, the mixture was stirred at 280°C for 4 hours to carry out a disproportionation reaction, yielding crude disproportionated rosin.

Next, the crude disproportionated rosin was distilled under a nitrogen seal at a reduced pressure of 3 mmHg, and the main fraction distilling at 195 to 250°C was designated as the purified disproportionated rosin. 200 parts of the obtained purified disproportionated rosin and 0.6 parts of 5% palladium-on-carbon (with a water content of 50%) were charged into a 1-liter shaking autoclave. After removing oxygen from the system, the system was pressurized with hydrogen to 0.5 Kg/cm$^2$, the temperature was raised to 275°C, and a dehydrogenation reaction was carried out at that temperature for 3 hours, to obtain disproportionated rosin (A4) (hereinafter referred to as a component (A4)) with a softening point of 87°C.

Example 5

1000 parts of Chinese gum rosin and 2 parts of 5% palladium-on-carbon (with a water content of 50%) as a hydrogenation catalyst were charged into a 3-liter autoclave. After removing oxygen from the system, the system was pressurized with hydrogen to 100 Kg/cm$^2$, the temperature was raised to 275°C while stirring, and a hydrogenation reaction was carried out at that temperature for 3 hours, to obtain crude hydrogenated rosin.

Next, the crude hydrogenated rosin was distilled under a nitrogen seal at a reduced pressure of 3 mmHg, and the main fraction distilling at 195 to 250°C was designated as the purified hydrogenated rosin. 200 parts of the obtained purified hydrogenated rosin and 0.1 parts of 5% palladium-on-carbon (with a water content of 50%) were charged into a 1-liter shaking autoclave. After carrying out nitrogen replacement to remove oxygen from the system, the temperature in the system was raised to 250°C, and a dehydrogenation reaction was carried out at that temperature for 3 hours to obtain hydrogenated rosin (A4) (hereinafter referred to as a component (A5)) with a softening point of 84°C.

Example 6

Into a reaction vessel equipped with a stirrer, a reflux condenser with a water separator, and a thermometer, 1,000 parts of Chinese gum rosin were charged, and while stirring under a nitrogen atmosphere, the temperature was raised to 180°C to melt it. Next, 267 parts of fumaric acid were added, the temperature was raised to 230°C with stirring, and after holding at that temperature for 1 hour, fumaric acid-modified rosin (A6) (hereinafter referred to as a component (A6)) with a softening point of 150°C was obtained.

Example 7

Into a reaction apparatus equipped with a thermometer, a stirrer, a nitrogen inlet tube, and a pressure-reducing device, 700 parts of Chinese gum rosin, 700 parts of xylene, and 17.5 parts of zinc chloride as a catalyst were charged, and a polymerization reaction was carried out for 7 hours at 140°C under a nitrogen stream. After filtering the catalyst from the reaction product, the xylene was distilled off under conditions of a liquid temperature below 200°C and a reduced pressure of 1300 Pa. Then, under conditions of a liquid temperature of 200 to 275°C and a reduced pressure of 400 Pa, the rosin decomposition products and unreacted gum rosin were distilled off to obtain polymerized rosin (A7) (hereinafter referred to as a component (A7)) with a softening point of 140°C.

Example 8

Into a reaction vessel equipped with a stirrer, a thermometer, a reflux condenser, and a nitrogen gas inlet tube, 600.0 parts of molten Chinese gum rosin at about 160°C and 42 parts of maleic anhydride were charged, and by reacting at 200°C for 2 hours while stirring under a nitrogen gas stream, maleic anhydride-modified rosin was obtained.
Next, into a reaction vessel equipped with a stirrer, a thermometer, a reflux condenser, and a nitrogen gas inlet tube, 663.2 parts of Chinese gum rosin and 55.6 parts of glycerin were charged, and by reacting at 270°C for 15 hours while stirring under a nitrogen gas stream, a rosin ester was obtained.
Next, into a reaction vessel equipped with a stirrer, a thermometer, a reflux condenser, and a nitrogen gas inlet tube, 23.60 parts of itaconic acid, 0.05 parts of sodium styrenesulfonate, 5.90 parts of 2-ethylhexyl acrylate, 15.30 parts of cyclohexyl methacrylate, 1.70 parts of sodium methallylsulfonate, 53.50 parts of acrylamide, 220 parts of deionized water, 250 parts of isopropyl alcohol, and 0.50 parts of 2-mercaptoethanol as a chain transfer agent were charged, and the temperature of the reaction system was raised to 50°C while stirring the mixture and bubbling nitrogen gas through it. Then, 2.20 parts of ammonium persulfate (APS) were added as a polymerization initiator, the temperature was raised to 80°C, and held for 180 minutes. Subsequently, the isopropyl alcohol was distilled off by steam sparging, and a predetermined amount of deionized water was added to obtain an aqueous solution of a high-molecular-weight surfactant (with a solid content of 25.1%).
Moreover, into a reaction vessel equipped with a stirrer, a thermometer, a reflux condenser, and a nitrogen gas inlet tube, 70 parts of the maleic anhydride-modified rosin and 30 parts of the rosin ester were charged and melted by heating at about 160°C. Then, while stirring, 7 parts (on a solid basis) of the aqueous solution of the high-molecular-weight surfactant were gradually added dropwise to form a W/O (water-in-oil) emulsion, and then hot water was added to form a stable O/W (oil-in-water) emulsion. Thereafter, by cooling this emulsion to room temperature, an emulsion (A8) containing the maleic anhydride-modified rosin and the rosin ester, with a solid content of 50.3% (hereinafter referred to as a component (A8)), was obtained.

Comparative Example 1

Into a reaction apparatus equipped with a thermometer, a stirrer, a reflux condenser, a nitrogen inlet tube, and a pressure-reducing device, Chinese gum rosin with an acid value of 172.0 mgKOH/g, a softening point of 74°C, and a Gardner color of 6 was distilled under a nitrogen seal at a reduced pressure of 1 mmHg, and the main fraction was obtained as purified rosin (A1)' (hereinafter referred to as a component (A1)').

Comparative Example 2

Commercially available terpene (A2)' (manufactured by Arakawa Chemical Industries, Ltd., product name "Toyomatsu-jirushi Turpentine Oil") (hereinafter referred to as a component (A2)'), was used as is as the insect damage inhibitor.

Comparative Example 4

Commercially available ethanol (A3)' (hereinafter referred to as a component (A3)'), was dissolved in water to prepare a 10% aqueous solution, which was used as the insect damage inhibitor.

Comparative Example 6

Water (A4)' (hereinafter referred to as a component (A4)'), was used as is as the insect damage inhibitor.

(Measurement of Softening Point)

The softening points of components (A1) to (A7) were measured according to JIS K 5902.

(Total Amount of Volatile Components When Held at 80°C for 10 Minutes)

The volatile component amount in the component (A1) was calculated as a toluene equivalent amount from the relative ratio of the peak areas obtained by gas chromatography-mass spectrometry (GC/MS) for the component (A1) and a toluene standard sample.

Specifically, first, 1 mL of toluene (with a specific gravity of 0.9) and 999 mL of methanol (with a specific gravity of 0.8) were mixed to prepare a methanol solution, and this solution was used as the toluene standard sample. Next, 1 g of the component (A1) was sealed in the below-mentioned headspace sample vial (20 mL), the sample vial was heated at 80°C for 10 minutes, and 1 mL of the 20 mL gas phase after heating was injected into the below-mentioned GC/MS and measured under the following measurement conditions. Moreover, 1 $\mu$L of the toluene standard sample (with a toluene amount of 0.8 $\mu$g) was directly injected into the below-mentioned GC/MS without going through the headspace and was measured under the following measurement conditions.

Then, from the GC/MS peak area ($S_1$) up to a retention time of 25 min derived from the volatile components in the component (A1) as measured from the component (A1), and the toluene-derived GC/MS peak area ($S_0$) as measured from the toluene standard sample, the volatile component amount in the component (A1) was calculated as an equivalent amount, assuming all volatile components in the component (A1) were toluene, using the following formula. For the components (A2) to (A7) and the components (A1)' to (A2)', the volatile component amount was calculated in the same manner.

Volatile component amount in the component (A1) ($\mu$g, toluene equivalent amount) = $S_1/S_0 \times 0.8\ \mu g \times 20$

The measurement apparatus used was a headspace GC/MS system (GC: Agilent 7890B (manufactured by Agilent Technologies) / MS: Agilent 5977A (manufactured by Agilent Technologies) / Headspace Sampler: MPS robotic pro (manufactured by GERSTEL)). The measurement conditions were as follows.

GC
Column: VF-5ms (0.25 mm * 0.25 $\mu$m * 30 m)
Oven temperature: 50°C (hold 5 min) - 300°C (hold 0 min) at 10°C/min
Inlet temperature: 280°C
Carrier gas: He (constant flow: 1 mL/min)
Injection mode: Split (split ratio 150/1)
MS
Mass range (m/z): 29 to 650
Ion source temperature: 230°C
Quadrupole temperature: 150°C
Headspace
Sample vial: 20 mL
Sample amount: 1 g
Sample heating conditions: 80°C for 10 min
Gas phase injection volume: 1 mL

<Test 1>

To horticultural soil, the component (A1), which had been pulverized into a powder, was added in an amount of 1 part by mass, per 100 parts by mass of the horticultural soil, and the mixture was stirred until uniform. The resulting soil mixture was packed into a nursery planter (37 cm x 20 cm x 15 cm), and approximately 40 radish seeds (variety: New Comet, manufactured by Takii & Co., Ltd.) were sown. For the untreated plot, only horticultural soil was packed into a planter, and approximately 40 radish seeds were sown in the same manner. A growth test was conducted in a greenhouse for 30 days from sowing. On the 14th day of growth, poorly growing individuals were thinned out to adjust the number of plants to about 20. On the 30th day of growth, the state of insect damage on all plants was visually observed, and the insect damage control effect (repellent effect against pests) was evaluated based on the following criteria. The results are shown in Table 1. The test was conducted in the same manner for the components (A2) to (A7) and the components (A1)' to (A2)'. Moreover, Comparative Example 3 in Table 1 shows the results for the case where nothing was added to the horticultural soil.

o: The number of individuals that suffered insect damage was less than 10.

×: The number of individuals that suffered insect damage was 10 or more.

Table 1

| | Rosin-based resin (A) | | Repellent effect |
|---|---|---|---|
| | Composition | Amount of volatile components ($\mu$g)* | |
| Example 1 | (A1) | 13.4 | ○ |
| Example 2 | (A2) | 17.3 | ○ |
| Example 3 | (A3) | 2.1 | ○ |
| Example 4 | (A4) | 1.4 | ○ |
| Example 5 | (A5) | 3.0 | ○ |
| Example 6 | (A6) | 4.2 | ○ |
| Example 7 | (A7) | 1.2 | ○ |
| Comparative example 1 | (A1)' | 0.5 | × |
| Comparative example 2 | (A2)' | 730000 | × |
| Comparative example 3 | - | | × |

The notes in Table 1 are as follows.

*This is the value for the total amount of volatile components ($\mu$g) per 1 g of rosin-based resin when held at 80°C for 10 minutes.

From Test 1, when the components (A1) to (A7) were mixed with the soil, the insect damage control effect was sustained for as long as one month. In other words, by using the components (A1) to (A7), for which the total amount of volatile components ($\mu$g) when held at 80°C for 10 minutes is 1 $\mu$g or more per 1 g of resin, the insect damage control effect was sustained for a long period. Moreover, the components (A1) to (A7) had suppressed odor.

<Test 2>

Ten female adult two-spotted spider mites were inoculated onto 'Naga-uzura' kidney bean seedlings (14 days after germination) grown in plastic pots, and an ethanol solution of the component (A1) was further diluted 10-fold with deionized water, and the resulting 1% solution was sprayed onto the spider mites. Two additional pots with similarly grown kidney bean seedlings were prepared. On the 2nd, 4th, 9th, 13th, and 17th days after spraying, the total number of two-spotted spider mites on the adaxial surface, abaxial surface, and true leaves of the kidney beans in each pot was counted, and the average value was calculated. The results are shown in Table 2. The test was conducted in the same manner for the component (A3)'. Moreover, Comparative example 5 in Table 2 shows the results for the case where nothing was sprayed.

Table 2

| | Rosin-based resin (A) | | Number of two-spotted spider mites (Average) | | | | |
|---|---|---|---|---|---|---|---|
| | Composition | Amount of volatile components ($\mu$g)* | Day 2 | Day 4 | Day 9 | Day 13 | Day 17 |
| Example 1 | (A1) | 13.4 | 7 | 5 | 56 | 119 | 168 |
| Comparative example 4 | (A3)' | - | 9 | 8 | 287 | 564 | 924 |
| Comparative example 5 | - | | 10 | 10 | 285 | 537 | 961 |

The notes in Table 2 are as follows.

*This is the value for the total amount of volatile components ($\mu$g) per 1 g of rosin-based resin when held at 80°C for 10 minutes.

From Test 2, when the component (A1) was sprayed on the two-spotted spider mites, it was superior in its insect damage control effect (pest reproduction inhibition effect) compared to the cases where the component (A3)' was used or nothing was sprayed, and the effect was also sustained for two weeks or more.

<Test 3>

A solution of the component (A8) diluted to a concentration of 5% with deionized water was sprayed onto 10 larvae of the buff-tip moth (Phalera flavescens), and after spraying, the larvae were transferred to a plastic cup containing two pear leaves. One additional similar plastic cup was prepared. At 0 hours, 6 hours, and 24 hours after transferring the larvae, the total number of surviving larvae in the two cups was examined. The results are shown in Table 3. The test was conducted in the same manner for the component (A4)'.

Table 3

| | Rosin-based resin (A) | | Number of surviving buff-tip moth larvae | | |
|---|---|---|---|---|---|
| | Composition | Amount of volatile components ($\mu$g)* | 0 hours | 6 hours | 24 hours |
| Example 8 | (A8) | 52.0 | 20 | 8 | 2 |
| Comparative example 6 | (A4)' | - | 20 | 20 | 20 |

The notes in Table 3 are as follows.

*This is the value for the total amount of volatile components ($\mu$g) per 1 g of rosin-based resin when held at 80°C for 10 minutes.

From Test 3, when the component (A8) was sprayed on the buff-tip moth larvae, it was superior in its insect damage control effect (insecticidal effect against pests) compared to the case where the component (A4)' was used.

**Claims**

1. An insect damage inhibitor for use in agricultural and horticultural applications to control insect damage, the insect damage inhibitor comprising a rosin-based resin (A),
wherein a total amount of volatile components in the rosin-based resin (A) when held at 80°C for 10 minutes is 1 $\mu$g or more per 1g of resin.

2. The insect damage inhibitor according to claim 1, wherein the rosin-based resin (A) contains at least one selected from the group consisting of natural rosin, hydrogenated rosin, disproportionated rosin, polymerized rosin, $\alpha,\beta$-unsaturated carboxylic acid-modified rosin, rosin esters, alkali metal salts of rosins, and alkaline earth metal salts of rosins.

3. The insect damage inhibitor according to claim 1 or 2, further comprising a surfactant (B) and water.

4. The insect damage inhibitor according to any one of claims 1 to 3, wherein the agricultural and horticultural applications comprise application to the stems, leaves, flowers, or roots of a plant.

5. The insect damage inhibitor according to any one of claims 1 to 4, wherein the agricultural and horticultural applications comprise application to soil for cultivating a plant.

6. The insect damage inhibitor according to any one of claims 1 to 5, comprising at least one selected from the group consisting of a pest repellent, a pest reproduction inhibitor, and an insecticide.

7. A method for using a resin composition, the method comprising using a resin composition containing a rosin-based resin (A) to control insect damage,

wherein a total amount of volatile components in the rosin-based resin (A) when held at 80°C for 10 minutes is 1 μg or more per 1g of resin, and
wherein the method is for agricultural and horticultural applications.

8. The method for using a resin composition according to claim 7, wherein the rosin-based resin (A) comprises at least one selected from the group consisting of natural rosin, hydrogenated rosin, disproportionated rosin, polymerized rosin, α,β-unsaturated carboxylic acid-modified rosin, rosin esters, alkali metal salts of rosins, and alkaline earth metal salts of rosins.

9. The method for using a resin composition according to claim 7 or 8, wherein the resin composition comprises a surfactant (B) and water.

10. The method for using a resin composition according to any one of claims 7 to 9, wherein the resin composition is applied to the stems, leaves, flowers, or roots of a plant.

11. The method for using a resin composition according to any one of claims 7 to 10, wherein the resin composition is applied to soil for cultivating a plant.

12. The method for using a resin composition according to any one of claims 7 to 11, wherein the resin composition is applied as at least one selected from the group consisting of a pest repellent, a pest reproduction inhibitor, and an insecticide.

13. A cultivation method for cultivating a plant for agricultural and horticultural applications in soil, the method comprising blending the insect damage inhibitor of any one of claims 1 to 7 into the soil.

14. A potting soil for use in agricultural and horticultural applications, comprising soil and the insect damage inhibitor of any one of claims 1 to 7.

15. A method for improving soil,

wherein the soil is for cultivating a plant for agricultural and horticultural applications, and
wherein the insect damage inhibitor of any one of claims 1 to 7 is applied to the soil.

## INTERNATIONAL SEARCH REPORT

| International application No. |
|---|
| **PCT/JP2024/007894** |

### A. CLASSIFICATION OF SUBJECT MATTER

*A01N 65/00*(2009.01)i; *A01N 37/08*(2006.01)i; *A01N 65/06*(2009.01)i; *A01P 17/00*(2006.01)i; *C09K 17/32*(2006.01)i
FI:  A01N65/00 Z; A01N65/06; A01P17/00; A01N37/08; C09K17/32 H

According to International Patent Classification (IPC) or to both national classification and IPC

### B. FIELDS SEARCHED

Minimum documentation searched (classification system followed by classification symbols)

A01N65/00; A01N37/08; A01N65/06; A01P17/00; C09K17/32

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| X | JP 2003-238312 A (AGRO-KANESHO CO., LTD.) 27 August 2003 (2003-08-27) claims, paragraphs [0018]-[0019], [0023]-[0024], examples | 1-16 |
| X | JP 2005-60339 A (AGRO-KANESHO CO., LTD.) 10 March 2005 (2005-03-10) claims, paragraphs [0009]-[0010], [0018]-[0021], [0028]-[0029], examples | 1-16 |
| X | JP 2006-137728 A (KAO CORPORATION) 01 June 2006 (2006-06-01) claims, paragraphs [0012]-[0013], [0016], examples | 1-16 |
| X | JP 2007-326832 A (KAO CORPORATION) 20 December 2007 (2007-12-20) claims, paragraphs [0014]-[0015], [0017], [0046], examples | 1-16 |
| X | JP 2005-179258 A (HAYASE, Manabu et al.) 07 July 2005 (2005-07-07) claims, paragraphs [0007], [0017], examples | 1-4, 6-10, 12 |
| X | CN 114451427 A (LIFE HEALTH SCIENCE RESEARCH INSTITUTE LIMITED COMPANY OF HEWEI GAO) 10 May 2022 (2022-05-10) claims, paragraph [0009], examples | 1-16 |

✓ Further documents are listed in the continuation of Box C.      ✓ See patent family annex.

| | | |
|---|---|---|
| * | Special categories of cited documents: | "T" later document published after the international filing date or priority date and not in conflict with the application but cited to understand the principle or theory underlying the invention |
| "A" | document defining the general state of the art which is not considered to be of particular relevance | |
| "D" | document cited by the applicant in the international application | "X" document of particular relevance; the claimed invention cannot be considered novel or cannot be considered to involve an inventive step when the document is taken alone |
| "E" | earlier application or patent but published on or after the international filing date | |
| "L" | document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" | document referring to an oral disclosure, use, exhibition or other means | |
| "P" | document published prior to the international filing date but later than the priority date claimed | "&" document member of the same patent family |

| Date of the actual completion of the international search | Date of mailing of the international search report |
|---|---|
| **01 May 2024** | **21 May 2024** |

| Name and mailing address of the ISA/JP | Authorized officer |
|---|---|
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (July 2022)

# EP 4 681 537 A1

## INTERNATIONAL SEARCH REPORT

<table>
<tr><td colspan="3"></td><td>International application No.</td></tr>
<tr><td colspan="3"></td><td>**PCT/JP2024/007894**</td></tr>
</table>

**C.    DOCUMENTS CONSIDERED TO BE RELEVANT**

| Category* | Citation of document, with indication, where appropriate, of the relevant passages | Relevant to claim No. |
|---|---|---|
| X | CN 105850998 A (GUANGXI NORMAL UNIVERSITY) 17 August 2016 (2016-08-17) <br> claims, examples | 1-16 |
| X | CN 106212461 A (NANTONG ZHUFENG MACHINERY CO., LTD.) 14 December 2016 (2016-12-14) <br> claims, examples | 1-2, 6-8, 12 |
| X | CN 104705318 A (GUANGDONG ZHONGXUN AGRICULTURAL TECHNOLOGY CO., LTD.) 17 June 2015 (2015-06-17) <br> claims, paragraphs [0004], [0012], examples | 1-16 |
| X | CN 104705333 A (GUANGDONG ZHONGXUN AGRICULTURAL TECHNOLOGY CO., LTD.) 17 June 2015 (2015-06-17) <br> claims, paragraphs [0004], [0012], examples | 1-16 |
| X | CN 104705335 A (GUANGDONG ZHONGXUN AGRICULTURAL TECHNOLOGY CO., LTD.) 17 June 2015 (2015-06-17) <br> claims, paragraphs [0004], [0012], examples | 1-16 |

Form PCT/ISA/210 (second sheet) (July 2022)

## INTERNATIONAL SEARCH REPORT
### Information on patent family members

International application No.

**PCT/JP2024/007894**

| Patent document cited in search report | | | Publication date (day/month/year) | Patent family member(s) | Publication date (day/month/year) |
|---|---|---|---|---|---|
| JP | 2003-238312 | A | 27 August 2003 | (Family: none) | |
| JP | 2005-60339 | A | 10 March 2005 | (Family: none) | |
| JP | 2006-137728 | A | 01 June 2006 | (Family: none) | |
| JP | 2007-326832 | A | 20 December 2007 | (Family: none) | |
| JP | 2005-179258 | A | 07 July 2005 | (Family: none) | |
| CN | 114451427 | A | 10 May 2022 | (Family: none) | |
| CN | 105850998 | A | 17 August 2016 | (Family: none) | |
| CN | 106212461 | A | 14 December 2016 | (Family: none) | |
| CN | 104705318 | A | 17 June 2015 | (Family: none) | |
| CN | 104705333 | A | 17 June 2015 | (Family: none) | |
| CN | 104705335 | A | 17 June 2015 | (Family: none) | |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2020100639 A
- JP 2018002593 A
- JP 2002154910 A